# EUROPEAN PATENT APPLICATION

(11) **EP 4 482 040 A1**
(43) Date of publication of application: **25.12.2024**
(21) Application number: 23752233.9
(22) Date of filing: 13.01.2023
(51) Int. Cl.: H04B 1/401

(54) **INFORMATION TRANSMISSION METHOD AND APPARATUS, AND STORAGE MEDIUM**

(30) Priority: 14.02.2022 CN 202210135667
(71) Applicant: Datang Mobile Communications Equipment Co., Ltd., Beijing 100085 (CN)
(72) Inventor: HUANG, Qiuping, Beijing 100085 (CN)
(74) Representative: Studio Torta S.p.A.
(86) International application number: PCT/CN2023/072146
(87) International publication number: WO 2023/151453

(57) **Abstract**

Provided in the embodiments of the present disclosure are an information transmission method and apparatus, and a storage medium. The method comprises: sending SRS antenna switching capability information to a network device, wherein the SRS antenna switching capability information comprises first information, and the first information is used for indicating one or more pieces of the following information: a UE not supporting an SRS antenna switching mode in a first set, the UE not supporting SRS antenna switching, one SRS antenna switching mode in the first set that is supported by the UE, and a plurality of SRS antenna switching modes in the first set that are supported by the UE; receiving SRS configuration information, which is sent by the network device, wherein the SRS configuration information is determined by the network device on the basis of the SRS antenna switching capability information; and sending an SRS on the basis of the SRS configuration information. By means of limiting the number of combinations of SRS antenna switching modes that can be indicated, the waste of signaling resources is avoided, and the resource utilization rate is thus improved.

## Description

### CROSS-REFERENCES TO RELATED APPLICATIONS

The present application claims priority to Chinese patent application No. 2022101356677 filed on February 14, 2022, entitled "Information Transmission Method and Apparatus, and Storage Medium", which is hereby incorporated by reference in its entirety.

### FIELD

The present application relates to the field of communication technologies, and in particular, to methods and apparatuses for information transmission, and storage mediums.

### BACKGROUND

In order to obtain downlink (DL) channel state information (CSI) better, a terminal/user equipment (UE) may report its supported sounding reference signal (SRS) antenna switching capability.

As the maximum number of receiving antennas supported by the UE increases, if the UE reports all possible combinations of SRS antenna switching patterns (also referred to as Tx port switching pattern, transmission antenna port switching pattern, antenna port switching pattern, etc.), it requires large signaling overheads and waste signaling resources.

### BRIEF SUMMARY

Embodiments of the present application provide methods and apparatuses for information transmission, and storage mediums, which can solve a technical problem of serious waste of signaling resources in the related art.

An embodiment of the present application provides a method for information transmission, including:
transmitting sounding reference signal (SRS) antenna switching capability information to a network device, where the SRS antenna switching capability information includes first information;
receiving SRS configuration information transmitted by the network device, where the SRS configuration information is determined by the network device based on the SRS antenna switching capability information; and
transmitting an SRS based on the SRS configuration information,
where the first information is for indicating one or more of the following information:
   user equipment (UE) not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

In an embodiment, in case that the first information is for indicating the plurality of SRS antenna switching patterns supported by the UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each of the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

In an embodiment, the SRS antenna switching capability information further includes second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

In an embodiment, in case that the first information is for indicating one or more SRS antenna switching patterns supported by the UE in the first set, and the second information is for indicating one or more SRS antenna switching patterns supported by the UE in the second set, all SRS antenna switching patterns indicated by the first information and SRS antenna switching patterns indicated by the second information meet one or more of the following conditions:
any of all the SRS antenna switching patterns indicated by the first information and the SRS antenna switching patterns indicated by the second information is not a downgrading pattern of any other SRS antenna switching patterns in the SRS antenna switching patterns indicated by the first information and the SRS antenna switching patterns indicated by the second information;
the number of receiving antennas corresponding to each of the SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each of the SRS antenna switching patterns indicated by the first information and the SRS antenna switching patterns indicated by the second information is the same,
where the SRS antenna switching patterns indicated by the first information and the SRS antenna switching patterns indicated by the second information include one or more SRS antenna switching patterns in the first set indicated by the first information and one or more SRS antenna switching patterns in the second set indicated by the second information.

In an embodiment, the UE supports a downgrading pattern of the SRS antenna switching pattern indicated by the first information.

In an embodiment, the SRS antenna switching capability information further includes third information, and the third information is for indicating one or more of the following information:
the UE supporting a downgrading pattern of an SRS antenna switching pattern;
the UE not supporting any downgrading pattern of an SRS antenna switching pattern; or
a downgrading pattern of an SRS antenna switching pattern supported by the UE.

In an embodiment, the SRS antenna switching patterns in the first set include one or more of the following information:
SRS antenna switching patterns supported by a system;
SRS antenna switching patterns configured by the network device; or
preset SRS antenna switching patterns.

In an embodiment, the SRS antenna switching patterns supported by the system include t1r1, t1r2, tlr4, tlr6, tlr8, t2r2, t2r4, t2r6, t2r8, t4r4 and t4r8.

In an embodiment, the preset SRS antenna switching patterns include at least t1r1, tlr2, tlr4, tlr6, tlr8, t2r2, t2r4, t2r6, t2r8, t4r4 and t4r8; or
the preset SRS antenna switching patterns include at least tlr6, tlr8, t2r6, t2r8, and t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns include at least tlr6, tlr8, t2r6, t2r8, t4r8, tlr6-t2r6 and tlr8-t2r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

In an embodiment, the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

In an embodiment, in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to a first SRS antenna switching pattern is not greater than the number of transmitting antenna ports corresponding to a second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to a first SRS antenna switching pattern is not greater than the number of transmitting antenna ports corresponding to a second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, whether a first SRS antenna switching pattern is a downgrading pattern of a second SRS antenna switching pattern is determined by a preset mapping relationship.

In an embodiment, the SRS antenna switching pattern may also be referred to as an SRS antenna port switching pattern.

In an embodiment, the preset mapping relationship includes at least one of the following:
downgrading patterns corresponding to the SRS antenna switching pattern tlr6 includes at least t1r1, tlr2 and tlr4;
downgrading patterns corresponding to the SRS antenna switching pattern tlr8 includes at least t1r1, tlr2, tlr4 and tlr6;
downgrading patterns corresponding to the SRS antenna switching pattern t2r6 includes at least t1r1, tlr2, t2r2, t2r4;
downgrading patterns corresponding to the SRS antenna switching pattern t2r8 includes at least t1r1, tlr2, tlr4, t2r2, t2r4, t2r6;
downgrading patterns corresponding to the SRS antenna switching pattern t4r8 includes at least t1r1, tlr2, t2r2, t2r4, and t4r4;
downgrading patterns corresponding to the SRS antenna switching pattern t2r2 includes at least t1r1 and tlr2;
downgrading patterns corresponding to the SRS antenna switching pattern t2r4 includes at least t1r1, tlr2, tlr4 and t2r2;
downgrading patterns corresponding to the SRS antenna switching pattern t2r6 includes at least t1r1, tlr2, tlr4, tlr6, t2r2, t2r4;
downgrading patterns corresponding to the SRS antenna switching pattern t2r8 includes t1r1, tlr2, tlr4, tlr6, tlr8, t2r2, t2r4, t2r6;
downgrading patterns corresponding to the SRS antenna switching pattern t4r4 includes at least t1r1, t2r2, tlr4 and t2r4; or
downgrading patterns corresponding to the SRS antenna switching pattern t4r8 includes at least t1r1, tlr2, t2r2, t2r4, t4r4, tlr4, tlr6, tlr8, t2r6, t2r8.

An embodiment of the present application further provides a method for information transmission, including:
obtaining sounding reference signal (SRS) antenna switching capability information transmitted by UE, where the SRS antenna switching capability information includes first information;
determining SRS configuration information based on the SRS antenna switching capability information; and
transmitting the SRS configuration information to the UE,
where the first information is for indicating one or more of the following information:
   user equipment (UE) not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

In an embodiment, the determining SRS configuration information based on the SRS antenna switching capability information includes:
determining the SRS configuration information based on the first information.

In an embodiment, the determining the SRS configuration information based on the first information includes:
in case that the first information is for indicating SRS antenna switching patterns supported by the UE in the first set, determining the SRS configuration information based on one or more SRS antenna switching patterns indicated by the first information.

In an embodiment, the SRS antenna switching capability information further includes second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

In an embodiment, the determining SRS configuration information based on the SRS antenna switching capability information includes:
determining the SRS configuration information based on the first information and the second information.

In an embodiment, the determining the SRS configuration information based on the first information and the second information includes:
in case that the first information is for indicating SRS antenna switching patterns supported by the UE in the first set, and the second information is for indicating that the UE does not support SRS antenna switching patterns in the second set, determining the SRS configuration information based on one or more SRS antenna switching patterns indicated by the first information.

In an embodiment, the determining the SRS configuration information based on the first information and the second information includes:
in case that the first information is for indicating that UE does not support SRS antenna switching patterns in the first set, and the second information is for indicating SRS antenna switching patterns supported by the UE in the second set, determining the SRS configuration information based on one or more SRS antenna switching patterns indicated by the second information.

In an embodiment, the determining the SRS configuration information based on the first information and the second information includes:
in case that the first information is for indicating SRS antenna switching patterns supported by the UE in the first set, and the second information is for indicating SRS antenna switching patterns supported by the UE in the second set, determining the SRS configuration information based on one or more SRS antenna switching patterns indicated by the first information and one or more SRS antenna switching patterns indicated by the second information.

In an embodiment, the SRS antenna switching capability information further includes third information, and the third information is for indicating one or more of the following information:
the UE supporting a downgrading pattern of the SRS antenna switching pattern;
the UE not supporting any downgrading pattern of the SRS antenna switching pattern; or
a downgrading pattern of the SRS antenna switching pattern supported by the UE.

In an embodiment, the determining SRS configuration information based on the SRS antenna switching capability information includes:
determining the SRS configuration information based on the first information and the third information; or
determining the SRS configuration information based on the first information, the second information and the third information.

In an embodiment, the determining the SRS configuration information based on the first information and the third information includes:
in case that the first information is for indicating SRS antenna switching patterns supported by the UE in the first set, and the third information is for indicating a downgrading pattern of the SRS antenna switching pattern supported by the UE, determining the SRS configuration information based on one or more SRS antenna switching patterns indicated by the first information and downgrading patterns of the one or more SRS antenna switching patterns indicated by the first information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns in the second set supported by the UE, and the third information is for indicating that UE does not support a downgrading pattern of the SRS antenna switching pattern, determining the SRS configuration information based on one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE does not support a downgrading pattern of the SRS antenna switching pattern, determining the SRS configuration information based on one or more SRS antenna switching patterns indicated by the first information;
in case that the first information is for indicating SRS antenna switching patterns supported by the UE in the first set, the second information is for indicating SRS antenna switching patterns supported by the UE in the second set, and the third information is for indicating that the UE does not support a downgrading pattern of the SRS antenna switching pattern, determining the SRS configuration information based on one or more SRS antenna switching patterns indicated by the first information and one or more SRS antenna switching patterns indicated by the second information;
in case that the first information is for indicating that the UE does not support SRS antenna switching patterns in the first set, the second information is for indicating SRS antenna switching patterns supported by the UE in the second set, and the third information is for indicating that the UE supports a downgrading pattern of the SRS antenna switching pattern, determining the SRS configuration information based on one or more SRS antenna switching patterns indicated by the second information and downgrading patterns of the one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE supports a downgrading pattern of the SRS antenna switching pattern, determining the SRS configuration information based on one or more SRS antenna switching patterns indicated by the first information and downgrading patterns of the one or more SRS antenna switching patterns indicated by the first information; or
in case that the first information is for indicating SRS antenna switching patterns supported by the UE in the first set, the second information is for indicating SRS antenna switching patterns supported by the UE in the second set, and the third information is for indicating that the UE supports a downgrading pattern of the SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

In an embodiment, the downgrading patterns of the SRS antenna switching pattern indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading pattern of the SRS antenna switching patterns indicated by the third information are all or part of the downgrading patterns corresponding to the SRS antenna switching patterns indicated by the first information and the downgrading patterns corresponding to the SRS antenna switching pattern indicated by the second information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the second information and the downgrading pattern of the SRS antenna switching pattern supported by the UE indicated by the third information;
in case that the first information is for indicating SRS antenna switching patterns supported by the UE in the first set, the second information is for indicating that the UE does not support SRS antenna switching patterns in the second set, and the third information is for indicating a downgrading pattern of an SRS antenna switching pattern supported by the UE, determining the SRS configuration information based on one or more SRS antenna switching patterns indicated by the first information and the downgrading pattern of the SRS antenna switching pattern supported by the UE indicated by the third information;
in case that the first information is for indicating that the UE does not support SRS antenna switching patterns in the first set, the second information is for indicating that the UE does not support SRS antenna switching patterns in the second set, and the third information is for indicating a downgrading pattern of an SRS antenna switching pattern supported by the UE, determining the SRS configuration information based on the downgrading pattern of the SRS antenna switching pattern supported by the UE indicated by the third information;
in case that the first information is for indicating SRS antenna switching patterns supported by the UE in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the first information, one or more SRS antenna switching patterns indicated by the second information and the downgrading pattern of the SRS antenna switching pattern supported by the UE indicated by the third information.

An embodiment of the present application further provides a terminal, including a processor, a transceiver and a memory,
where the processor is used to store a computer program, the transceiver is used to transmit and receive data under control of the processor; and the memory is read the computer program in the memory and perform operations of:
transmitting sounding reference signal (SRS) antenna switching capability information to a network device, where the SRS antenna switching capability information includes first information;
receiving SRS configuration information transmitted by the network device, where the SRS configuration information is determined by the network device based on the SRS antenna switching capability information;
transmitting an SRS based on the SRS configuration information,
where the first information is for indicating one or more of the following information:
   user equipment (UE) not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

In an embodiment, in case that the first information is for indicating the plurality of SRS antenna switching patterns supported by the UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each of the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

In an embodiment, the SRS antenna switching capability information further includes second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

In an embodiment, in case that the first information is for indicating one or more SRS antenna switching patterns supported by the UE in the first set, and the second information is for indicating one or more SRS antenna switching patterns supported by the UE in the second set, all SRS antenna switching patterns indicated by the first information and the SRS antenna switching patterns indicated by the second information meet one or more of the following conditions:
any of SRS antenna switching patterns indicated by the first information and the SRS antenna switching patterns indicated by the second information is not a downgrading pattern of any other SRS antenna switching patterns in the SRS antenna switching patterns indicated by the first information and the SRS antenna switching patterns indicated by the second information;
the number of receiving antennas corresponding to each of the SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each of the SRS antenna switching patterns indicated by the first information and the SRS antenna switching patterns indicated by the second information is the same,
where the SRS antenna switching patterns indicated by the first information and the SRS antenna switching patterns indicated by the second information include one or more SRS antenna switching patterns in the first set indicated by the first information and one or more SRS antenna switching patterns in the second set indicated by the second information.

In an embodiment, the UE supports a downgrading pattern of the SRS antenna switching pattern indicated by the first information.

In an embodiment, the SRS antenna switching capability information further includes third information, and the third information is for indicating one or more of the following information:
the UE supporting a downgrading pattern of an SRS antenna switching pattern;
the UE not supporting any downgrading pattern of an SRS antenna switching pattern; or
a downgrading pattern of an SRS antenna switching pattern supported by the UE.

In an embodiment, the SRS antenna switching patterns in the first set include one or more of the following information:
SRS antenna switching patterns supported by a system;
SRS antenna switching patterns configured by the network device; or
preset SRS antenna switching patterns.

In an embodiment, the SRS antenna switching patterns supported by the system include t1r1, tlr2, tlr4, tlr6, tlr8, t2r2, t2r4, t2r6, t2r8, t4r4 and t4r8.

In an embodiment, the preset SRS antenna switching patterns include at least t1r1, tlr2, tlr4, tlr6, tlr8, t2r2, t2r4, t2r6, t2r8, t4r4 and t4r8; or
the preset SRS antenna switching patterns include at least tlr6, tlr8, t2r6, t2r8, and t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns include at least tlr6, tlr8, t2r6, t2r8, t4r8, tlr6-t2r6 and tlr8-t2r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

In an embodiment, the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

In an embodiment, in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to a first SRS antenna switching pattern is not greater than the number of transmitting antenna ports corresponding to a second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to a first SRS antenna switching pattern is not greater than the number of transmitting antenna ports corresponding to a second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, whether a first SRS antenna switching pattern is a downgrading pattern of a second SRS antenna switching pattern is determined by a preset mapping relationship.

In an embodiment, the preset mapping relationship includes at least one of the following:
downgrading patterns corresponding to the SRS antenna switching pattern tlr6 includes t1r1, tlr2 and tlr4;
downgrading patterns corresponding to the SRS antenna switching pattern tlr8 includes at least t1r1, tlr2, tlr4 and tlr6;
downgrading patterns corresponding to the SRS antenna switching pattern t2r6 includes at least t1r1, tlr2, t2r2, t2r4;
downgrading patterns corresponding to the SRS antenna switching pattern t2r8 includes at least t1r1, tlr2, tlr4, t2r2, t2r4, t2r6;
downgrading patterns corresponding to the SRS antenna switching pattern t4r8 includes at least t1r1, tlr2, t2r2, t2r4, and t4r4;
downgrading patterns corresponding to the SRS antenna switching pattern t2r2 includes at least t1r1 and tlr2;
downgrading patterns corresponding to the SRS antenna switching pattern t2r4 includes at least t1r1, tlr2, tlr4 and t2r2;
downgrading patterns corresponding to the SRS antenna switching pattern t2r6 includes at least t1r1, tlr2, tlr4, tlr6, t2r2, t2r4;
downgrading patterns corresponding to the SRS antenna switching pattern t2r8 includes at least t1r1, tlr2, tlr4, tlr6, tlr8, t2r2, t2r4, t2r6;
downgrading patterns corresponding to the SRS antenna switching pattern t4r4 includes at least t1r1, t2r2, tlr4 and t2r4; or
downgrading patterns corresponding to the SRS antenna switching pattern t4r8 includes at least t1r1, tlr2, t2r2, t2r4, t4r4, tlr4, tlr6, tlr8, t2r6, t2r8.

An embodiment of the present application further provides a network device, including a processor, a transceiver and a memory,
where the processor is used to store a computer program, the transceiver is used to transmit and receive data under control of the processor; and the memory is read the computer program in the memory and perform operations of:
obtaining sounding reference signal (SRS) antenna switching capability information transmitted by UE, where the SRS antenna switching capability information includes first information;
determining SRS configuration information based on the SRS antenna switching capability information; and
transmitting the SRS configuration information to the UE,
where the first information is for indicating one or more of the following information:
   user equipment (UE) not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

In an embodiment, the determining SRS configuration information based on the SRS antenna switching capability information includes:
determining the SRS configuration information based on the first information.

In an embodiment, the determining the SRS configuration information based on the first information includes:
in case that the first information is for indicating SRS antenna switching patterns supported by the UE in the first set, determining the SRS configuration information based on one or more SRS antenna switching patterns indicated by the first information.

In an embodiment, the SRS antenna switching capability information further includes second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

In an embodiment, the determining SRS configuration information based on the SRS antenna switching capability information includes:
determining the SRS configuration information based on the first information and the second information.

In an embodiment, the determining the SRS configuration information based on the first information and the second information includes:
in case that the first information is for indicating SRS antenna switching patterns supported by the UE in the first set, and the second information is for indicating that the UE does not support SRS antenna switching patterns in the second set, determining the SRS configuration information based on one or more SRS antenna switching patterns indicated by the first information.

In an embodiment, the determining the SRS configuration information based on the first information and the second information includes:
in case that the first information is for indicating that UE does not support SRS antenna switching patterns in the first set, and the second information is for indicating SRS antenna switching patterns supported by the UE in the second set, determining the SRS configuration information based on one or more SRS antenna switching patterns indicated by the second information.

In an embodiment, the determining the SRS configuration information based on the first information and the second information includes:
in case that the first information is for indicating SRS antenna switching patterns supported by the UE in the first set, and the second information is for indicating SRS antenna switching patterns supported by the UE in the second set, determining the SRS configuration information based on one or more SRS antenna switching patterns indicated by the first information and one or more SRS antenna switching patterns indicated by the second information.

In an embodiment, the SRS antenna switching capability information further includes third information, and the third information is for indicating one or more of the following information:
the UE supporting a downgrading pattern of the SRS antenna switching pattern;
the UE not supporting any downgrading pattern of the SRS antenna switching pattern; or
a downgrading pattern of the SRS antenna switching pattern supported by the UE.

In an embodiment, the determining SRS configuration information based on the SRS antenna switching capability information includes:
determining the SRS configuration information based on the first information and the third information; or
determining the SRS configuration information based on the first information, the second information and the third information.

In an embodiment, the determining the SRS configuration information based on the first information and the third information includes:
in case that the first information is for indicating SRS antenna switching patterns supported by the UE in the first set, and the third information is for indicating a downgrading pattern of the SRS antenna switching pattern supported by the UE, determining the SRS configuration information based on one or more SRS antenna switching patterns indicated by the first information and downgrading patterns of the one or more SRS antenna switching patterns indicated by the first information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns in the second set supported by the UE, and the third information is for indicating that UE does not support a downgrading pattern of the SRS antenna switching pattern, determining the SRS configuration information based on one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE does not support a downgrading pattern of the SRS antenna switching pattern, determining the SRS configuration information based on one or more SRS antenna switching patterns indicated by the first information;
in case that the first information is for indicating SRS antenna switching patterns supported by the UE in the first set, the second information is for indicating SRS antenna switching patterns supported by the UE in the second set, and the third information is for indicating that the UE does not support a downgrading pattern of the SRS antenna switching pattern, determining the SRS configuration information based on one or more SRS antenna switching patterns indicated by the first information and one or more SRS antenna switching patterns indicated by the second information;
in case that the first information is for indicating that the UE does not support SRS antenna switching patterns in the first set, the second information is for indicating SRS antenna switching patterns supported by the UE in the second set, and the third information is for indicating that the UE supports a downgrading pattern of the SRS antenna switching pattern, determining the SRS configuration information based on one or more SRS antenna switching patterns indicated by the second information and downgrading patterns of the one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE supports a downgrading pattern of the SRS antenna switching pattern, determining the SRS configuration information based on one or more SRS antenna switching patterns indicated by the first information and downgrading patterns of the one or more SRS antenna switching patterns indicated by the first information; or
in case that the first information is for indicating SRS antenna switching patterns supported by the UE in the first set, the second information is for indicating SRS antenna switching patterns supported by the UE in the second set, and the third information is for indicating that the UE supports a downgrading pattern of the SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

In an embodiment, the downgrading patterns of the SRS antenna switching pattern indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading pattern of the SRS antenna switching patterns indicated by the third information are all or part of the downgrading patterns corresponding to the SRS antenna switching patterns indicated by the first information and the downgrading patterns corresponding to the SRS antenna switching pattern indicated by the second information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the second information and the downgrading pattern of the SRS antenna switching pattern supported by the UE indicated by the third information;
in case that the first information is for indicating SRS antenna switching patterns supported by the UE in the first set, the second information is for indicating that the UE does not support SRS antenna switching patterns in the second set, and the third information is for indicating a downgrading pattern of an SRS antenna switching pattern supported by the UE, determining the SRS configuration information based on one or more SRS antenna switching patterns indicated by the first information and the downgrading pattern of the SRS antenna switching pattern supported by the UE indicated by the third information;
in case that the first information is for indicating that the UE does not support SRS antenna switching patterns in the first set, the second information is for indicating that the UE does not support SRS antenna switching patterns in the second set, and the third information is for indicating a downgrading pattern of an SRS antenna switching pattern supported by the UE, determining the SRS configuration information based on the downgrading pattern of the SRS antenna switching pattern supported by the UE indicated by the third information;
in case that the first information is for indicating SRS antenna switching patterns supported by the UE in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the first information, one or more SRS antenna switching patterns indicated by the second information and the downgrading pattern of the SRS antenna switching pattern supported by the UE indicated by the third information.

An embodiment of the present application further provides an apparatus for information transmission, including:
a first transmitting module, used for transmitting sounding reference signal (SRS) antenna switching capability information to a network device, where the SRS antenna switching capability information includes first information;
a first receiving module, used for receiving SRS configuration information transmitted by the network device, where the SRS configuration information is determined by the network device based on the SRS antenna switching capability information;
a second transmitting module, used for transmitting an SRS based on the SRS configuration information,
where the first information is for indicating one or more of the following information:
   user equipment (UE) not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

In an embodiment, in case that the first information is for indicating the plurality of SRS antenna switching patterns supported by the UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each of the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

In an embodiment, the SRS antenna switching capability information further includes second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

In an embodiment, in case that the first information is for indicating one or more SRS antenna switching patterns supported by the UE in the first set, and the second information is for indicating one or more SRS antenna switching patterns supported by the UE in the second set, all SRS antenna switching patterns indicated by the first information and SRS antenna switching patterns indicated by the second information meet one or more of the following conditions:
any of all the SRS antenna switching patterns indicated by the first information and the SRS antenna switching patterns indicated by the second information is not a downgrading pattern of any other SRS antenna switching patterns in the SRS antenna switching patterns indicated by the first information and the SRS antenna switching patterns indicated by the second information;
the number of receiving antennas corresponding to each of the SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each of the SRS antenna switching patterns indicated by the first information and the SRS antenna switching patterns indicated by the second information is the same,
where the SRS antenna switching patterns indicated by the first information and the SRS antenna switching patterns indicated by the second information include one or more SRS antenna switching patterns in the first set indicated by the first information and one or more SRS antenna switching patterns in the second set indicated by the second information.

In an embodiment, the UE supports a downgrading pattern of the SRS antenna switching pattern indicated by the first information.

In an embodiment, the SRS antenna switching capability information further includes third information, and the third information is for indicating one or more of the following information:
the UE supporting a downgrading pattern of an SRS antenna switching pattern;
the UE not supporting any downgrading pattern of an SRS antenna switching pattern; or
a downgrading pattern of an SRS antenna switching pattern supported by the UE.

In an embodiment, the SRS antenna switching patterns in the first set include one or more of the following information:
SRS antenna switching patterns supported by a system;
SRS antenna switching patterns configured by the network device; or
preset SRS antenna switching patterns.

In an embodiment, the SRS antenna switching patterns supported by the system include t1r1, tlr2, tlr4, tlr6, tlr8, t2r2, t2r4, t2r6, t2r8, t4r4 and t4r8.

In an embodiment, the preset SRS antenna switching patterns include at least t1r1, tlr2, tlr4, tlr6, tlr8, t2r2, t2r4, t2r6, t2r8, t4r4 and t4r8; or
the preset SRS antenna switching patterns include at least tlr6, tlr8, t2r6, t2r8, and t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns include at least tlr6, tlr8, t2r6, t2r8, t4r8, tlr6-t2r6 and tlr8-t2r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

In an embodiment, the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

In an embodiment, in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to a first SRS antenna switching pattern is not greater than the number of transmitting antenna ports corresponding to a second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to a first SRS antenna switching pattern is not greater than the number of transmitting antenna ports corresponding to a second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, whether a first SRS antenna switching pattern is a downgrading pattern of a second SRS antenna switching pattern is determined by a preset mapping relationship.

In an embodiment, the preset mapping relationship includes at least one of the following:
downgrading patterns corresponding to the SRS antenna switching pattern tlr6 includes at least t1r1, tlr2 and tlr4;
downgrading patterns corresponding to the SRS antenna switching pattern tlr8 includes at least t1r1, tlr2, tlr4 and tlr6;
downgrading patterns corresponding to the SRS antenna switching pattern t2r6 includes at least t1r1, tlr2, t2r2, t2r4;
downgrading patterns corresponding to the SRS antenna switching pattern t2r8 includes at least t1r1, tlr2, tlr4, t2r2, t2r4, t2r6;
downgrading patterns corresponding to the SRS antenna switching pattern t4r8 includes at least t1r1, tlr2, t2r2, t2r4, and t4r4;
downgrading patterns corresponding to the SRS antenna switching pattern t2r2 includes at least t1r1 and tlr2;
downgrading patterns corresponding to the SRS antenna switching pattern t2r4 includes at least t1r1, tlr2, tlr4 and t2r2;
downgrading patterns corresponding to the SRS antenna switching pattern t2r6 includes at least t1r1, tlr2, tlr4, tlr6, t2r2, t2r4;
downgrading patterns corresponding to the SRS antenna switching pattern t2r8 includes t1r1, tlr2, tlr4, tlr6, tlr8, t2r2, t2r4, t2r6;
downgrading patterns corresponding to the SRS antenna switching pattern t4r4 includes at least t1r1, t2r2, tlr4 and t2r4; or
downgrading patterns corresponding to the SRS antenna switching pattern t4r8 includes at least t1r1, tlr2, t2r2, t2r4, t4r4, tlr4, tlr6, tlr8, t2r6, t2r8.

An embodiment of the present application further provides an apparatus for information transmission, including:
a first obtaining module, used for obtaining sounding reference signal (SRS) antenna switching capability information transmitted by UE, wherein the SRS antenna switching capability information comprises first information;
a first determining module, used for determining SRS configuration information based on the SRS antenna switching capability information;
a third transmitting module, used for transmitting the SRS configuration information to the UE,
where the first information is for indicating one or more of the following information:
   user equipment (UE) not supporting SRS antenna switching patterns in a first set;
   UE not supporting SRS antenna switching;
   one SRS antenna switching pattern supported by UE in the first set; or
   a plurality of SRS antenna switching patterns supported by the UE in the first set.

In an embodiment, the determining SRS configuration information based on the SRS antenna switching capability information includes:
determining the SRS configuration information based on the first information.

In an embodiment, the determining the SRS configuration information based on the first information includes:
in case that the first information is for indicating SRS antenna switching patterns supported by the UE in the first set, determining the SRS configuration information based on one or more SRS antenna switching patterns indicated by the first information.

In an embodiment, the SRS antenna switching capability information further includes second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

In an embodiment, the determining SRS configuration information based on the SRS antenna switching capability information includes:
determining the SRS configuration information based on the first information and the second information.

In an embodiment, the determining the SRS configuration information based on the first information and the second information includes:
in case that the first information is for indicating SRS antenna switching patterns supported by the UE in the first set, and the second information is for indicating that the UE does not support SRS antenna switching patterns in the second set, determining the SRS configuration information based on one or more SRS antenna switching patterns indicated by the first information.

In an embodiment, the determining the SRS configuration information based on the first information and the second information includes:
in case that the first information is for indicating that UE does not support SRS antenna switching patterns in the first set, and the second information is for indicating SRS antenna switching patterns supported by the UE in the second set, determining the SRS configuration information based on one or more SRS antenna switching patterns indicated by the second information.

In an embodiment, the determining the SRS configuration information based on the first information and the second information includes:
in case that the first information is for indicating SRS antenna switching patterns supported by the UE in the first set, and the second information is for indicating SRS antenna switching patterns supported by the UE in the second set, determining the SRS configuration information based on one or more SRS antenna switching patterns indicated by the first information and one or more SRS antenna switching patterns indicated by the second information.

In an embodiment, the SRS antenna switching capability information further includes third information, and the third information is for indicating one or more of the following information:
the UE supporting a downgrading pattern of the SRS antenna switching pattern;
the UE not supporting any downgrading pattern of the SRS antenna switching pattern; or
a downgrading pattern of the SRS antenna switching pattern supported by the UE.

In an embodiment, the determining SRS configuration information based on the SRS antenna switching capability information includes:
determining the SRS configuration information based on the first information and the third information; or
determining the SRS configuration information based on the first information, the second information and the third information.

In an embodiment, the determining the SRS configuration information based on the first information and the third information includes:
in case that the first information is for indicating SRS antenna switching patterns supported by the UE in the first set, and the third information is for indicating a downgrading pattern of the SRS antenna switching pattern supported by the UE, determining the SRS configuration information based on one or more SRS antenna switching patterns indicated by the first information and downgrading patterns of the one or more SRS antenna switching patterns indicated by the first information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns in the second set supported by the UE, and the third information is for indicating that UE does not support a downgrading pattern of the SRS antenna switching pattern, determining the SRS configuration information based on one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE does not support a downgrading pattern of the SRS antenna switching pattern, determining the SRS configuration information based on one or more SRS antenna switching patterns indicated by the first information;
in case that the first information is for indicating SRS antenna switching patterns supported by the UE in the first set, the second information is for indicating SRS antenna switching patterns supported by the UE in the second set, and the third information is for indicating that the UE does not support a downgrading pattern of the SRS antenna switching pattern, determining the SRS configuration information based on one or more SRS antenna switching patterns indicated by the first information and one or more SRS antenna switching patterns indicated by the second information;
in case that the first information is for indicating that the UE does not support SRS antenna switching patterns in the first set, the second information is for indicating SRS antenna switching patterns supported by the UE in the second set, and the third information is for indicating that the UE supports a downgrading pattern of the SRS antenna switching pattern, determining the SRS configuration information based on one or more SRS antenna switching patterns indicated by the second information and downgrading patterns of the one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE supports a downgrading pattern of the SRS antenna switching pattern, determining the SRS configuration information based on one or more SRS antenna switching patterns indicated by the first information and downgrading patterns of the one or more SRS antenna switching patterns indicated by the first information; or
in case that the first information is for indicating SRS antenna switching patterns supported by the UE in the first set, the second information is for indicating SRS antenna switching patterns supported by the UE in the second set, and the third information is for indicating that the UE supports a downgrading pattern of the SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

In an embodiment, the downgrading patterns of the SRS antenna switching pattern indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading pattern of the SRS antenna switching patterns indicated by the third information are all or part of the downgrading patterns corresponding to the SRS antenna switching patterns indicated by the first information and the downgrading patterns corresponding to the SRS antenna switching pattern indicated by the second information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the second information and the downgrading pattern of the SRS antenna switching pattern supported by the UE indicated by the third information;
in case that the first information is for indicating SRS antenna switching patterns supported by the UE in the first set, the second information is for indicating that the UE does not support SRS antenna switching patterns in the second set, and the third information is for indicating a downgrading pattern of an SRS antenna switching pattern supported by the UE, determining the SRS configuration information based on one or more SRS antenna switching patterns indicated by the first information and the downgrading pattern of the SRS antenna switching pattern supported by the UE indicated by the third information;
in case that the first information is for indicating that the UE does not support SRS antenna switching patterns in the first set, the second information is for indicating that the UE does not support SRS antenna switching patterns in the second set, and the third information is for indicating a downgrading pattern of an SRS antenna switching pattern supported by the UE, determining the SRS configuration information based on the downgrading pattern of the SRS antenna switching pattern supported by the UE indicated by the third information;
in case that the first information is for indicating SRS antenna switching patterns supported by the UE in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the first information, one or more SRS antenna switching patterns indicated by the second information and the downgrading pattern of the SRS antenna switching pattern supported by the UE indicated by the third information.

An embodiment of the present application further provides a processor-readable storage medium, where the processor readable storage medium stores a computer program, and the computer program is used to cause a processor to perform steps of the methods for information transmission described above.

An embodiment of the present application further provides a computer-readable storage medium, where the computer readable storage medium stores a computer program, and the computer program is used to cause a computer to perform steps of the methods for information transmission described above.

An embodiment of the present application further provides a communication device-readable storage medium, where the communication device-readable storage medium stores a computer program, and the computer program is used to cause a communication device to perform steps of the methods for information transmission described above.

An embodiment of the present application further provides a chip product-readable storage medium, where the chip product device-readable storage medium stores a computer program, and the computer program is used to cause a chip product to perform steps of the methods for information transmission described above.

In the methods and apparatuses for information transmission, and storage mediums, by restricting the number of SRS antenna switching pattern combinations that can be indicated, it may avoid wasting signaling resources and improve the resource utilization rate.

### BRIEF DESCRIPTION OF THE DRAWINGS

In order to more clearly illustrate the solutions disclosed in the embodiments of the present application, the drawings used in the embodiments will be briefly described below. The drawings in the following description are only illustrative, and other drawings may be obtained according to these drawings without any creative work for those skilled in the art.
FIG. 1 is a schematic flowchart of a method for information transmission according to an embodiment of the present application;
FIG. 2 is another schematic flowchart of a method for information transmission according to an embodiment of the present application;
FIG. 3 is a schematic structural diagram of a terminal according to an embodiment of the present application;
FIG. 4 is a schematic structural diagram of a network device according to an embodiment of the present application;
FIG. 5 is a first schematic flowchart of an apparatus for information transmission according to an embodiment of the present application; and
FIG. 6 is a second schematic flowchart of an apparatus for information transmission according to an embodiment of the present application.

### DETAILED DESCRIPTION

In order to obtain DL CSI better, UE can report its supported SRS antenna switching capability.

A base station configures one or more SRS resource sets used to obtain DL CSI for UE according to an SRS antenna switching capability reported by UE. Each SRS resource set includes one or more SRS resources. By measuring all SRS resources, the base station may obtain channel state information of downlink receiving antennas, and then guide downlink scheduling.

For UE that supports up to 4 of receiving antennas, the switching capability of SRS antenna supported by UE is reported in the following way.

The UE reports first information (the first information may be a parameter or an information element (IE)). The first information is used to indicates a candidate value for the UE from a plurality of candidate values for indicating SRS Tx port switching pattern, and the first information indicates a combination of SRS Tx port switching patterns supported by the UE (the combination of patterns here may only have one pattern or have a plurality of patterns).

For UE supporting a plurality of SRS antenna switching patterns, the UE is allowed to report all SRS antenna switching patterns supported by the UE.

When the maximum number of receiving antennas supported by UE is 4, the candidate values for indicating SRS Tx port switching pattern corresponding to the first information include all possible combinations of SRS Tx port switching patterns, and the required signaling overhead is acceptable. However, when UE supports a large number of receiving antennas, all possible combinations of SRS Tx port switching patterns included in the candidate values for indicating SRS Tx port switching patterns corresponding to the first information may increase, which leads to a large UE capability reporting overhead. For example, if an SRS antenna switching module supported by a system includes all xTyRs meeting x<=N, y<=N (where x represents the number of transmitting antenna ports/transmitting antennas, y represents the number of all or part of receiving antennas/receive antenna ports for UE, and N is a positive integer), it requires N bits to report combinations of all SRS antenna switching patterns.

Based on the above problems, the embodiment of the present application provides a method for information transmission, which avoids wasting signaling resources and improves the resource utilization rate by restricting the number of SRS antenna switching pattern combinations that can be indicated.

The solutions in the embodiments of the present application are clearly and completely described in the following with reference to the accompanying drawings in the embodiments of the present application. These embodiments are only illustrative embodiments of the present application. All other embodiments obtained by a person of ordinary skill in the art based on the embodiments of the present application without any creative work fall within the scope of the present application.

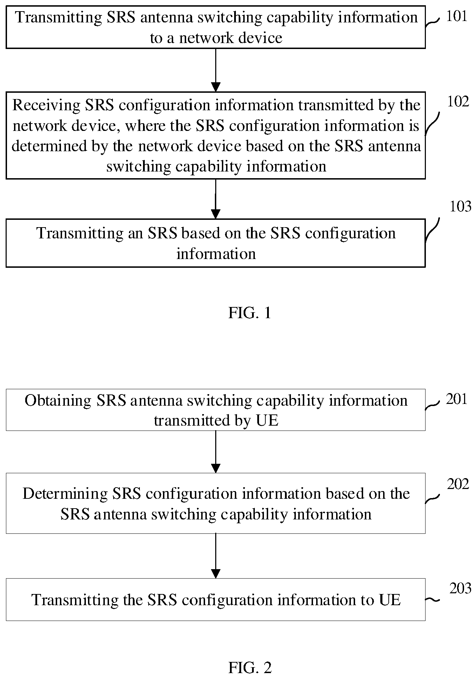

FIG. 1 is a schematic flowchart of a method for information transmission according to an embodiment of the present application. As shown in FIG. 1, an embodiment of the present application provides a method for information transmission, which may be performed by a UE, such as a mobile phone. The method includes the following steps.

Step 101: transmitting SRS antenna switching capability information to a network device.

The SRS antenna switching capability information includes first information, and the first information is for indicating one or more of the following information:
UE not supporting SRS antenna switching patterns in a first set;
UE not supporting SRS antenna switching;
one SRS antenna switching pattern supported by UE in the first set; or
a plurality of SRS antenna switching patterns supported by UE in the first set.

The SRS antenna switching capability information may also be SRS antenna port switching capability information.

The SRS antenna switching pattern may also be referred to as an SRS antenna port switching pattern.

In an embodiment, the SRS antenna switching patterns in the first set include one or more of the following information:
SRS antenna switching patterns supported by a system;
SRS antenna switching patterns configured by the network device; or
preset SRS antenna switching patterns.

The SRS antenna switching patterns in the first set are all SRS antenna switching patterns supported by the system.

In an embodiment, the SRS antenna switching patterns supported by the system includes t1r1, tlr2, tlr4, tlr6, tlr8, t2r2, t2r4, t2r6, t2r8, t4r4 and t4r8.

For example, when SRS antenna switching patterns supported by the system are {t1r1, tlr2, tlr4, tlr6, tlr8, t2r2, t2r4, t2r6, t2r8, t4r4, t4r8}, the SRS antenna switching patterns in the first set are {t1r1, tlr2, tlr4, tlr6, tlr8, t2r2, t2r4, t2r6, t2r8, t4r4, t2r8, t4r4, t4r8}.

The SRS antenna switching patterns in the first set may further include the SRS antenna switching patterns configured by the network device.

For example, the SRS antenna switching patterns configured by the network device includes t1r1, tlr2, tlr4, tlr6, tlr8, t2r2, t2r4, t2r6, t2r8, t4r4 and t4r8. After obtaining the above configuration of the network device, UE determines that the SRS antenna switching patterns in the first set is {t1r1, tlr2, tlr4, tlr6, tlr8, t2r2, t2r4, t2r6, t2r8, t4r4, t4r8}.

The SRS antenna switching pattern in the first set may further include the preset SRS antenna switching patterns.

The preset SRS antenna switching patterns may refer to SRS antenna switching patterns predefined in the protocol.

In an embodiment, the preset SRS antenna switching patterns include at least t1r1, tlr2, tlr4, tlr6, tlr8, t2r2, t2r4, t2r6, t2r8, t4r4 and t4r8; or
the preset SRS antenna switching patterns include at least tlr6, tlr8, t2r6, t2r8, and t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns include at least tlr6, tlr8, t2r6, t2r8, t4r8, tlr6-t2r6 and tlr8-t2r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

The preset SRS antenna switching patterns listed above are exemplary, but not limit the preset SRS antenna switching patterns. In practical applications, the preset SRS antenna switching patterns may be defined as required, and are not listed here.

In an embodiment, the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

Different SRS antenna port switching capability information IE corresponds to different first sets.

The first set is associated with the signaling carrying the first information, that is, the first set or the SRS antenna switching patterns in the first set are associated with the signaling carrying the first information.

For example, the first set or SRS antenna switching patterns in the first set is associated with a type of signaling carrying the first information.

The SRS antenna switching patterns in the first set corresponding to different types of signaling carrying the first information are also different.

For example, when carrying the SRS antenna switching capability information (first information) through a first IE, the SRS antenna switching patterns in the first set are {t1r1, tlr2, tlr4, t2r2, t2r4, t4r4}; when carrying SRS antenna switching capability information through a second IE, the SRS antenna switching patterns in the first set are {t1r1, tlr2, tlr4, tlr6, tlr8, t2r2, t2r4, t2r6, t2r8, t4r4, t4r8}.

Step 102: receiving SRS configuration information transmitted by the network device, where the SRS configuration information is determined by the network device based on the SRS antenna switching capability information.

After UE transmits the SRS antenna switching capability information to the network device, the network device obtains the SRS antenna switching capability information transmitted by UE.

The network device determines the SRS configuration information based on the SRS antenna switching capability information, and transmits the SRS configuration information to UE.

The SRS configuration information is for indicating SRS resource sets configured by the network side. Each SRS resource set includes one or more SRS resources.

Different SRS antenna switching patterns correspond to different SRS configuration information.

Step 103: transmitting an SRS based on the SRS configuration information.

After obtaining the SRS configuration information, UE transmits the SRS based on the SRS configuration information.

For example, UE determines the SRS resource sets configured by the network side according to the SRS configuration information, and uses one or more SRS resources in the SRS resource sets to transmit SRS.

The network side device obtains the SRS transmitted by UE and determines CSI according to the SRS.

In the method for information transmission provided by embodiments of the present application, by restricting the number of SRS antenna switching pattern combinations that can be indicated, it may avoid wasting signaling resources and improve the resource utilization rate.

In an embodiment, the first information is reported in the form of a bitmap.

For example, S bits are for indicating SRS antenna switching patterns supported by UE from S SRS antenna switching patterns, and each bit indicates one SRS antenna switching pattern. If a bit is set to "0", it means UE supports the SRS antenna switching pattern corresponding to this bit. If a bit is set to "1", it means UE does not support the SRS antenna switching pattern corresponding to this bit; vice versa.

In an embodiment, in case that the first information is for indicating the plurality of SRS antenna switching patterns supported by UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each SRS antenna switching patterns in the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same;
configurations corresponding to any of the plurality of SRS antenna switching patterns are not downgrading configurations of other SRS antenna switching patterns in the plurality of SRS antenna switching patterns;
one SRS antenna switching pattern making configurations of other SRS antenna switching patterns in the plurality of SRS antenna switching patterns be its downgrading configurations exists in the plurality of SRS antenna switching patterns.

A configuration corresponding to an SRS antenna switching pattern is an SRS configuration corresponding to the SRS antenna switching pattern.

A downgrading configuration of the SRS antenna switching pattern or a downgrading configuration corresponding to the SRS antenna switching pattern may be a configuration corresponding to a downgrading pattern of the SRS antenna switching pattern. For example, it is assumed that an SRS antenna switching pattern being tlr2 is a downgrading pattern of an SRS antenna switching pattern being tlr4, then an SRS configuration corresponding to the SRS antenna switching pattern being tlr2 is a downgrading configuration corresponding to the SRS antenna switching pattern being tlr4.

As an example, any SRS antenna switching pattern in the plurality of SRS antenna switching patterns is not a downgrading pattern of other SRS antenna switching patterns in the plurality of SRS antenna switching patterns. Any SRS antenna switching pattern in the plurality of SRS antenna switching patterns indicated by the first information may not be a downgrading pattern of other SRS antenna switching patterns.

For example, the plurality of SRS antenna switching patterns supported by UE in the first set are {t1r1, tlr2, tlr4, tlr6, tlr8, t2r2, t2r4, t2r6, t2r8, t4r4, t4r8}. In addition, downgrading patterns of each SRS antenna switching pattern is determined in a form of pre-defining by the protocol, as shown in table 1.

**Table 1 Mapping relationship I between SRS antenna switching patterns and its corresponding downgrading patterns**

| Number | SRS antenna switching pattern | downgrading pattern |
|---|---|---|
| 1 | t1r1 | null |
| 2 | t1r2 | t1r1 |
| 3 | t1r4 | t1r1, t1r2 |
| 4 | t1r6 | t1r1, t1r2, t1r4 |
| 5 | t1r8 | t1r1, t1r2, t1r4, t1r6 |
| 6 | t2r2 | t1r1 |
| 7 | t2r4 | t1r1, t1r2, t2r2 |
| 8 | t2r6 | t1r1, t1r2, t2r2,t2r4 |
| 9 | t2r8 | t1r1, t1r2, t1r4, t2r2, t2r4, t2r6 |
| 10 | t4r4 | t1r1, t2r2 |
| 11 | t4r8 | t1r1, t1r2, t2r2, t2r4, t4r4 |

The first information may indicate one from all or subsets of the following combinations:
{t1r1}, {tlr2}, {tlr4}, {tlr6}, {tlr8}, {t2r2}, {t2r4}, {t2r6}, {t2r8}, {t4r4}, {t4r8}, {tlr4, t2r2}, {tlr4, t2r4}, {tlr6, t2r6}, {tlr6, t2r4}, {tlr6, t2r2},{tlr8,t2r2},{tlr8,t2r4}, {tlr8,t2r6}, {tlr8,t2r8}, {tlr8,t4r4}, {tlr8,t4r8}, or {t2r8,t4r8}ₒ

The number of receiving antennas corresponding to each SRS antenna switching patterns in the plurality of SRS antenna switching patterns indicated by the first information may be the same.

Based on the above examples, the first information may indicate one from all or subsets of the following combinations:
{t1r1},{tlr2}, {tlr4}, {tlr6}, {tlr8}, {t2r2}, {t2r4}, {t2r6}, {t2r8}, {t4r4}, {t4r8}, {tlr4, t2r4}, {tlr4, t4r4},{t2r4, t4r4}, {tlr6, t2r6}, {tlr8, t2r8}, {tlr8, t4r8}, {t2r8, t4r8}, or {tlr8, t2r8,t4r8} ₒ

All the other SRS antenna switching patterns among the SRS antenna switching patterns indicated by the first information are the downgrading pattern of at least one of the SRS antenna switching patterns indicated by the first information.

Based on the above examples, the first information may indicate one from all or subsets of the following combinations:
combinations of one or more of {t1r1, tlr2, t2r2, t2r4, t4r4, tlr4, tlr6, tlr8, t2r6} with t4r8;
combinations of one or more of {t1r1, t2r2, tlr4, t2r4} with t4r4;
combinations of one or more of {t1r1, tlr2, tlr4, tlr6, tlr8, t2r2, t2r4, t2r6} with t2r8;
combinations of one or more of {t1r1, tlr2, tlr4, tlr6, t2r2, t2r4} with t2r6;
combinations of one or more of {t1r1, tlr2, tlr4, t2r2} with t2r4;
combinations of one or more of {t1r1, t1r2} with t2r2;
combinations of one or more of {t1r1, tlr2, tlr4, tlr6} with tlr8;
combinations of one or more of {t1r1, tlr2, tlr4} with tlr6;
combinations of one or more of {t1r1, t1r2} with tlr4;
a combination of t1r1 with tlr2; or
{t1r1}; {tlr2}; {tlr4}; {tlr6}; {tlr8}; {t2r2}; {t2r4}; {t2r6}; {t2r8}; {t4r4}; and {t4r8}.

The number of transmitting antenna ports corresponding to each SRS antenna switching patterns in the plurality of SRS antenna switching patterns indicated by the first information may be the same.

Based on the above examples, the first information indicates one from all or subsets of the following combinations:
combinations of one or any of {t1r1}, {tlr2}, {tlr4}, {tlr6}, {tlr8};
combinations of one or more of {t2r2}, {t2r4}, {t2r6}, {t2r8}; or
combinations of one or more of { t4r4 }, {t4r8}.

In the method for information transmission provided by embodiments of the present application, by further restricting the plurality of SRS antenna switching patterns indicated by the first information, it may further avoid wasting signaling resources and improve the resource utilization rate.

In an embodiment, the SRS antenna switching capability information further includes second information, and the second information is for indicating one or more of the following information:
UE not supporting SRS antenna switching patterns in a second set;
UE not supporting SRS antenna switching;
one SRS antenna switching pattern supported by UE in the second set; or
a plurality of SRS antenna switching patterns supported by UE in the second set.

The SRS antenna switching patterns in the second set include one or more of the following information:
SRS antenna switching patterns supported by the system;
SRS antenna switching patterns configured by the network device; or
preset SRS antenna switching patterns.

In the embodiments of the present application, the SRS antenna switching patterns in the second set may refer to the SRS antenna switching patterns in the first set in the above embodiment, and will not be repeated here.

The first set may be the same as the second set, and the first set may be all or part of the second set, or the second set may be all or part of the first set. The first set may also be completely different from the second set, that is, they do not intersect.

For example, the second set is defined by a known protocol, and the first set is newly added, etc.

In the method for information transmission provided by embodiments of the present application, by restricting the plurality of SRS antenna switching patterns that can be indicated through the first information and the second information, it may avoid wasting signaling resources and improve the resource utilization rate, and further improve the system compatibility.

In an embodiment, in case that the first information is for indicating one or more SRS antenna switching patterns supported by UE in the first set, and the second information is for indicating one or more SRS antenna switching patterns supported by UE in the second set, all SRS antenna switching patterns indicated by the first information and the SRS antenna switching patterns indicated by the second information meet one or more of the following conditions:
any of SRS antenna switching patterns indicated by the first information and the SRS antenna switching patterns indicated by the second information is not a downgrading pattern of other SRS antenna switching patterns in all SRS antenna switching patterns indicated by the first information and the SRS antenna switching patterns indicated by the second information;
the number of receiving antennas corresponding to each SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each SRS antenna switching patterns indicated by the first information and the SRS antenna switching patterns indicated by the second information is the same,
where all SRS antenna switching patterns indicated by the first information and the SRS antenna switching patterns indicated by the second information include one or more SRS antenna switching patterns in the first set indicated by the first information and one or more SRS antenna switching patterns in the second set indicated by the second information.

In an embodiment, in case that the first information is for indicating one or more SRS antenna switching patterns supported by UE in the first set, and the second information is for indicating one or more SRS antenna switching patterns supported by UE in the second set, all SRS antenna switching patterns indicated by the first information and the SRS antenna switching patterns indicated by the second information meet one or more of the following conditions:
any SRS antenna switching pattern is not a downgrading pattern of other SRS antenna switching patterns;
the number of receiving antennas corresponding to each SRS antenna switching patterns is the same;
all the other SRS antenna switching patterns are the downgrading pattern of at least one SRS antenna switching pattern; or
the number of transmitting antenna ports corresponding to each SRS antenna switching patterns is the same.

In an embodiment, a condition that all SRS antenna switching patterns indicated by the first information and the SRS antenna switching patterns indicated by the second information meet may be referred to the conditions in the above embodiments that a plurality of SRS antenna switching patterns indicated by the first information meet, and will not be repeated here.

In the method for information transmission provided by embodiments of the present application, by further restricting the plurality of SRS antenna switching patterns indicated by the second information, it may further avoid wasting signaling resources and improve the resource utilization rate.

In an embodiment, UE supports a downgrading pattern of an SRS antenna switching pattern indicated by the first information.

UE supports a downgrading pattern corresponding to any SRS antenna switching pattern indicated by the first information.

This downgrading pattern may also be referred to as the downgrading configuration, which may be a configuration corresponding to a downgrading pattern corresponding to the SRS antenna switching pattern.

For example, if the first information indicates that UE supports tlr4, and downgrading patterns corresponding to tlr4 are t1r1 and tlr2, it means that UE supports SRS configurations corresponding to t1r1, tlr2 and tlr4.

For another example, if the first information indicates that UE supports tlr8 and t2r8, and downgrading patterns corresponding to tlr8 are t1r1, tlr2, tlr4, tlr6, and downgrading patterns corresponding to t2r8 is t1r1, tlr2, tlr4, t2r2, t2r4, t2r6, it means that UE supports t1r1, tlr2, tlr4, tlr6, tlr8, t2r2, t2r4, t2r6, and t2r8.

A plurality of SRS antenna switching patterns being {t1r1, tlr2, tlr4, tlr6, tlr8, t2r2, t2r4, t2r6, t2r8, t4r4, t4r8} is taken as an example, it is assumed that downgrading patterns of each pattern are shown in numbers 1 to 11 of Table 1, the first information indicates some examples of one or more of items in the table.

In an embodiment, the SRS antenna switching capability information further includes third information, and the third information is for indicating one or more of the following information:
UE supporting a downgrading pattern of an SRS antenna switching pattern;
UE not supporting a downgrading pattern of an SRS antenna switching pattern; or
a downgrading pattern of an SRS antenna switching pattern supported by UE.

In an embodiment, in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

If the number of transmitting antenna ports in the first SRS antenna switching pattern is not greater than the number of transmitting antenna ports in the second SRS antenna switching pattern, and the number of receiving antennas in the first SRS antenna switching pattern is not greater than the number of receiving antennas in the second SRS antenna switching pattern, the first SRS antenna switching pattern is the downgrading pattern of the second SRS antenna switching pattern.

For example, if M is not greater than X and N is not greater than Y, the SRS antenna switching pattern tMrN is a downgrading pattern of SRS antenna switching pattern tXrY. M, N, X, and Y are positive integers.

In an embodiment, in case that the number of transmitting antenna ports corresponding to the first SRS antenna switching pattern is not greater than the number of transmitting antenna ports corresponding to the second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

If the number of SRS resources included in an SRS configuration corresponding to the first SRS antenna switching pattern is not greater than the number of SRS resources included in an SRS configuration corresponding to the second SRS antenna switching pattern, and the number of antenna ports corresponding to SRS resources in the SRS configuration corresponding to the first SRS antenna switching pattern is not greater than the number of antenna ports of SRS resources in the SRS configuration corresponding to the second SRS antenna switching pattern, the first SRS antenna switching pattern is the downgrading pattern of the second SRS antenna switching pattern.

In an embodiment, in case that the number of transmitting antenna ports corresponding to the first SRS antenna switching pattern is not greater than the number of transmitting antenna ports corresponding to the second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

If the number of transmitting antenna ports in the first SRS antenna switching pattern is not greater than the number of transmitting antenna ports in the second SRS antenna switching pattern, and the ratio of the number of receiving antennas to the number of transmitting antenna ports in the first SRS antenna switching pattern is not greater than the ratio of the number of receiving antennas to the number of transmitting antenna ports in the second SRS antenna switching pattern, the first SRS antenna switching pattern is the downgrading pattern of the second SRS antenna switching pattern.

For example, if M is not greater than X and N/M is not greater than Y/X, the SRS antenna switching pattern tMrN is the downgrading pattern of SRS antenna switching pattern tXrY. M, N, X, and Y are positive integers.

In an embodiment, whether the first SRS antenna switching pattern is the downgrading pattern of the second SRS antenna switching pattern is determined by a preset mapping relationship.

That is, downgrading patterns of each SRS antenna switching pattern are predefined by the protocol.

In an embodiment, the mapping relationship between the SRS antenna switching pattern and its corresponding downgrading configuration is represented by a preset mapping relationship. For example, it may be one or more in Table 2.

**Table 2 Mapping relationship II between SRS antenna switching patterns and its corresponding downgrading configurations**

| Number | SRS antenna switching pattern | downgrading configurations |
|---|---|---|
| 1 | t1r1 | null |
| 2 | t1r2 | t1r1 |
| 3 | t1r4 | t1r1, t1r2 |
| 4 | t1r6 | t1r1, t1r2, t1r4 |
| 5 | t1r8 | t1r1, t1r2, t1r4, t1r6 |
| 6 | t2r2 | t1r1 |
| 7 | t2r4 | t1r1, t1r2, t2r2 |
| 8 | t2r6 | t1r1, t1r2, t2r2, t2r4 |
| 9 | t2r8 | t1r1, t1r2, t1r4, t2r2, t2r4, t2r6 |
| 10 | t4r4 | t1r1, t2r2 |
| 11 | t4r8 | t1r1, t1r2, t2r2, t2r4, t4r4 |
| 12 | t2r2 | t1r1, t1r2 |
| 13 | t2r4 | t1r1, t1r2, t1r4, t2r2 |
| 14 | t2r6 | t1r1, t1r2, t1r4, t1r6, t2r2, t2r4 |
| 15 | t2r8 | t1r1, t1r2, t1r4, t1r6, t1r8, t2r2, t2r4, t2r6 |
| 16 | t4r4 | t1r1, t2r2, t1r4, t2r4 |
| 17 | t4r8 | t1r1, t1r2, t2r2, t2r4, t4r4, t1r4, t1r6, t1r8, t2r6 |

In an embodiment, the preset mapping relationship includes at least one of the following:
downgrading patterns corresponding to the SRS antenna switching pattern t1r6 includes at least t1r1, t1r2 and t1r4;
downgrading patterns corresponding to the SRS antenna switching pattern t1r8 includes at least t1r1, t1r2, t1r4 and t1r6;
downgrading patterns corresponding to the SRS antenna switching pattern t2r6 includes at least t1r1, tlr2, t2r2, t2r4;
downgrading patterns corresponding to the SRS antenna switching pattern t2r8 includes at least t1r1, tlr2, tlr4, t2r2, t2r4, t2r6;
downgrading patterns corresponding to the SRS antenna switching pattern t4r8 includes at least t1r1, tlr2, t2r2, t2r4, and t4r4;
downgrading patterns corresponding to the SRS antenna switching pattern t2r2 includes at least t1r1 and tlr2;
downgrading patterns corresponding to the SRS antenna switching pattern t2r4 includes at least t1r1, tlr2, tlr4 and t2r2;
downgrading patterns corresponding to the SRS antenna switching pattern t2r6 includes at least t1r1, tlr2, tlr4, tlr6, t2r2, t2r4;
downgrading patterns corresponding to the SRS antenna switching pattern t2r8 includes at least t1r1, tlr2, tlr4, tlr6, tlr8, t2r2, t2r4, t2r6;
downgrading patterns corresponding to the SRS antenna switching pattern t4r4 includes at least t1r1, t2r2, tlr4 and t2r4; or
downgrading patterns corresponding to the SRS antenna switching pattern t4r8 includes at least t1r1, tlr2, t2r2, t2r4, t4r4, tlr4, tlr6, tlr8, t2r6, t2r8.

In the method for information transmission provided by embodiments of the present application, by restricting the number of SRS antenna switching pattern combinations capable of being indicated, it may avoid wasting signaling resources and improve the resource utilization rate.

FIG. 2 is another schematic flowchart of a method for information transmission according to an embodiment of the present application. As shown in FIG. 2, an embodiment of the present application provides a method for information transmission, which may be performed by a network device, such as a base station. The method includes the following steps.

Step 201: obtaining SRS antenna switching capability information transmitted by UE.

The SRS antenna switching capability information includes first information, and the first information is for indicating one or more of the following information:
UE not supporting SRS antenna switching patterns in a first set;
UE not supporting SRS antenna switching;
one SRS antenna switching pattern supported by UE in the first set; or
a plurality of SRS antenna switching patterns supported by UE in the first set.

UE transmits SRS configuration information to network devices first. The network device obtains the SRS antenna switching capability information transmitted by UE.

Description of the first set may refer to the above method embodiment with UE as an execution subject, which are not repeated here.

Step 202: determining SRS configuration information based on the SRS antenna switching capability information.

After obtaining the SRS antenna switching capability information transmitted by UE, the network device determines the SRS configuration information based on the SRS antenna switching capability information.

Step 203: transmitting the SRS configuration information to UE.

After determining the SRS configuration information, the network device transmits the SRS configuration information to UE.

After obtaining the SRS configuration information, UE transmits an SRS based on the SRS configuration information.

For example, UE determines the SRS resource sets configured by the network side according to the SRS configuration information, and uses one or more SRS resources in the SRS resource sets to transmit SRS.

The network side device obtains the SRS transmitted by UE and determines CSI according to the SRS.

In the method for information transmission provided by embodiments of the present application, by restricting the number of SRS antenna switching pattern combinations capable of being indicated, it may avoid wasting signaling resources and improve the resource utilization rate.

In an embodiment, the determining SRS configuration information based on the SRS antenna switching capability information includes:
determining the SRS configuration information based on the first information.

In an embodiment, the determining the SRS configuration information based on the first information includes:
in case that the first information is for indicating SRS antenna switching patterns supported by UE in the first set, determining the SRS configuration information based on one or more SRS antenna switching patterns indicated by the first information.

SRS configuration information refers to the SRS configuration information corresponding to one SRS antenna switching pattern of one or more SRS antenna switching patterns indicated by the first information.

That is, the SRS configuration information may not be an SRS configuration information corresponding to an SRS antenna switching pattern other than the SRS antenna switching patterns indicated by the first information.

For example, if the first information indicates t1r8 and t2r8, the SRS configuration information may only be an SRS configuration corresponding to t1r8 or an SRS configuration corresponding to t2r8.

If UE supports downgrading patterns, the SRS configuration information is SRS configuration information that corresponds to one or more SRS antenna switching patterns indicated by the first information and downgrading patterns of the one or more SRS antenna switching patterns. Referring to the downgrading patterns in Table 2, if the first information indicates t1r8, the SRS configuration information may be the SRS configuration corresponding to t1r1, tlr2, tlr4, tlr6 and/or tlr8.

In an embodiment, the SRS antenna switching capability information further includes third information, and the third information is for indicating one or more of the following information:
UE supporting a downgrading pattern of an SRS antenna switching pattern;
UE not supporting a downgrading pattern of an SRS antenna switching pattern; or
a downgrading pattern of an SRS antenna switching pattern supported by UE.

In an embodiment, the determining SRS configuration information based on the SRS antenna switching capability information includes:
determining the SRS configuration information based on the first information and the third information.

In an embodiment, he determining the SRS configuration information based on the first information and the third information includes:
in case that the first information is for indicating SRS antenna switching patterns supported by UE in the first set, and the third information is for indicating a downgrading pattern of an SRS antenna switching pattern supported by UE, determining the SRS configuration information based on one or more SRS antenna switching patterns indicated by the first information and downgrading patterns of the one or more SRS antenna switching patterns indicated by the first information.

In an embodiment, SRS configuration information may be jointly determined according to the first information and the third information.

In case that the SRS antenna switching capability information includes the third information, or in case that the third information in the SRS antenna switching capability information indicates that UE supports downgrading patterns of the SRS antenna switching patterns, the SRS configuration information is SRS configuration information that corresponds to one or more SRS antenna switching patterns indicated by the first information and downgrading patterns of the one or more SRS antenna switching patterns.

In case that the SRS antenna switching capability information does not include the third information, or in case that the SRS antenna switching capability information includes the third information, but the third information indicates that UE does not support downgrading patterns of the SRS antenna switching patterns, the SRS configuration information is SRS configuration information that corresponds to one SRS antenna switching pattern of one or more SRS antenna switching patterns indicated by the first information.

In case that the SRS antenna switching capability information includes the third information, and in case that the third information indicates downgrading patterns of the SRS antenna switching patterns supported by UE, the downgrading patterns indicated by the third information are downgrading patterns corresponding to at least one of one or more SRS antenna switching patterns indicated by the first information. The SRS configuration information refers to the SRS configuration information corresponding to one of one or more SRS antenna switching patterns indicated by the first information and downgrading patterns of one or more SRS antenna switching patterns.

In an embodiment, the SRS antenna switching capability information further includes second information, and the second information is for indicating one or more of the following information:
UE not supporting SRS antenna switching patterns in a second set;
UE not supporting SRS antenna switching;
one SRS antenna switching pattern supported by UE in the second set; or
a plurality of SRS antenna switching patterns supported by UE in the second set.

In the embodiments of the present application, the SRS antenna switching patterns in the second set may refer to the SRS antenna switching patterns in the first set in the above embodiments, and are not repeated here.

In an embodiment, the determining SRS configuration information based on the SRS antenna switching capability information includes:
determining the SRS configuration information based on the first information and the second information.

In an embodiment, the determining the SRS configuration information based on the first information and the second information includes:
in case that the first information is for indicating SRS antenna switching patterns supported by UE in the first set, and the second information is for indicating that UE does not support SRS antenna switching patterns in the second set, determining the SRS configuration information based on one or more SRS antenna switching patterns indicated by the first information.

In an embodiment, the determining the SRS configuration information based on the first information and the second information includes:
in case that the first information is for indicating that UE does not support SRS antenna switching patterns in the first set, and the second information is for indicating SRS antenna switching patterns supported by UE in the second set, determining the SRS configuration information based on one or more SRS antenna switching patterns indicated by the second information.

In an embodiment, the determining the SRS configuration information based on the first information and the second information includes:
in case that the first information is for indicating SRS antenna switching patterns supported by UE in the first set, and the second information is for indicating SRS antenna switching patterns supported by UE in the second set, determining the SRS configuration information based on one or more SRS antenna switching patterns indicated by the first information and one or more SRS antenna switching patterns indicated by the second information.

In case that the second information indicates that the SRS antenna switching patterns in the second set is not supported and/or SRS antenna switching is not supported, and the first information indicates the SRS antenna switching patterns, the SRS configuration information is determined according to the first information, or the SRS configuration information is determined according to the first information and the third information.

In case that the first information indicates that SRS antenna switching pattern in the first set is not supported and/or SRS antenna switching is not supported, and the second information indicates the SRS antenna switching patterns, the SRS configuration information is determined according to the second information, or the SRS configuration information is determined according to the second information and the third information.

In case that both the first information and the second information indicate the SRS antenna switching patterns, the SRS configuration information is determined according to the SRS antenna switching pattern indicated by the first information and the SRS antenna switching patterns indicated by the second information.

The SRS configuration information is the SRS configuration information corresponding to one SRS antenna switching pattern of the plurality of SRS antenna switching patterns indicated by the first information and the SRS antenna switching patterns indicated by the second information. That is, the SRS configuration information may not be an SRS configuration information corresponding to an SRS antenna switching pattern other than the SRS antenna switching patterns indicated by the first information.

For example, the first information and the second information indicate t1r8 and t2r4 respectively, then the SRS configuration information may only be the SRS configuration corresponding to t1r8 or the SRS configuration corresponding to t2r4.

If UE supports downgrading patterns of the SRS antenna switching patterns, the SRS configuration information is SRS configuration information that corresponds to one SRS antenna switching pattern of a plurality of SRS antenna switching patterns indicated by the first information and the SRS antenna switching patterns indicated by the second information and their downgrading patterns. Taking Table 2 as an example again, it is assumed that the first information indicates t1r8 and the second information indicates t2r4, then the SRS configuration information may be SRS configurations corresponding to t1r1, tlr2, tlr4, tlr6, tlr8, t2r2 and/or t2r4.

In an embodiment, in case that the SRS antenna switching capability information includes the first information, the second information and the third information, the determining SRS configuration information based on the SRS antenna switching capability information includes:
determining the SRS configuration information based on the first information, the second information and the third information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns in the second set supported by UE, and the third information is for indicating that UE does not support a downgrading pattern of an SRS antenna switching pattern, determining the SRS configuration information based on one or more SRS antenna switching patterns indicated by the second information;
in case that the first information is for indicating SRS antenna switching patterns supported by UE in the first set, the second information is for indicating that UE does not support SRS antenna switching patterns in the second set, and the third information is for indicating that UE does not support a downgrading pattern of an SRS antenna switching pattern, determining the SRS configuration information based on one or more SRS antenna switching patterns indicated by the first information;
in case that the first information is for indicating SRS antenna switching patterns supported by UE in the first set, the second information is for indicating SRS antenna switching patterns supported by UE in the second set, and the third information is for indicating that UE does not support a downgrading pattern of an SRS antenna switching pattern, determining the SRS configuration information based on one or more SRS antenna switching patterns indicated by the first information and one or more SRS antenna switching patterns indicated by the second information;
in case that the first information is for indicating that UE does not support SRS antenna switching patterns in the first set, the second information is for indicating SRS antenna switching patterns supported by UE in the second set, and the third information is for indicating that UE supports a downgrading pattern of an SRS antenna switching pattern, determining the SRS configuration information based on one or more SRS antenna switching patterns indicated by the second information and downgrading patterns of one or more SRS antenna switching patterns indicated by the second information;
in case that the first information is for indicating SRS antenna switching patterns supported by UE in the first set, the second information is for indicating that UE does not support SRS antenna switching patterns in the second set, and the third information is for indicating that UE supports a downgrading pattern of an SRS antenna switching pattern, determining the SRS configuration information based on one or more SRS antenna switching patterns indicated by the first information and downgrading patterns of one or more SRS antenna switching patterns indicated by the first information; or
in case that the first information is for indicating SRS antenna switching patterns supported by UE in the first set, the second information is for indicating SRS antenna switching patterns supported by UE in the second set, and the third information is for indicating that UE supports a downgrading pattern of an SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

In an embodiment, the downgrading patterns of the SRS antenna switching patterns indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading patterns of the SRS antenna switching pattern indicated by the third information are all or part of the downgrading patterns corresponding to the SRS antenna switching patterns indicated by the first information and the downgrading patterns corresponding to the SRS antenna switching patterns indicated by the second information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns supported by UE in the second set, and the third information is for indicating a downgrading pattern of an SRS antenna switching pattern supported by UE, determining the SRS configuration information based on one or more SRS antenna switching patterns indicated by the second information and the downgrading pattern of the SRS antenna switching pattern supported by UE indicated by the third information;
in case that the first information is for indicating SRS antenna switching patterns supported by UE in the first set, the second information is for indicating that UE does not support SRS antenna switching patterns in the second set, and the third information is for indicating a downgrading pattern of an SRS antenna switching pattern supported by UE, determining the SRS configuration information based on one or more SRS antenna switching patterns indicated by the first information and the downgrading pattern of the SRS antenna switching pattern supported by UE indicated by the third information;
in case that the first information is for indicating that UE does not support SRS antenna switching patterns in the first set, the second information is for indicating that UE does not support SRS antenna switching patterns in the second set, and the third information is for indicating a downgrading pattern of an SRS antenna switching pattern supported by UE, determining the SRS configuration information based on the downgrading pattern of the SRS antenna switching pattern supported by UE indicated by the third information; or
in case that the first information is for indicating SRS antenna switching patterns supported by UE in the first set, the second information is for indicating SRS antenna switching patterns supported by UE in the second set, and the third information is for indicating a downgrading pattern of an SRS antenna switching pattern supported by UE, determining the SRS configuration information based on one or more SRS antenna switching patterns indicated by the first information, one or more SRS antenna switching patterns indicated by the second information and the downgrading pattern of the SRS antenna switching pattern supported by UE indicated by the third information.

In case that the SRS antenna switching capability information includes the first information, the second information and the third information, the SRS configuration information is jointly determined according to the first information, the second information and the third information.

For example, if the first information and the second information both indicate the SRS antenna switching patterns:
in case that the SRS antenna switching capability information includes the third information, or in case that the third information in the SRS antenna switching capability information indicates that UE supports downgrading patterns of the SRS antenna switching patterns, the SRS configuration information is SRS configuration information that corresponds to one SRS antenna switching pattern of a plurality of SRS antenna switching patterns indicated by the first information and their downgrading patterns;
in case that the SRS antenna switching capability information does not include the third information, or in case that the SRS antenna switching capability information includes the third information, but the third information indicates that UE does not support downgrading patterns of the SRS antenna switching patterns, the SRS configuration information is SRS configuration information that corresponds to one SRS antenna switching pattern of a plurality of SRS antenna switching patterns indicated by the first information and the SRS antenna switching patterns indicated by the second information; or
in case that the SRS antenna switching capability information includes the third information, and the third information indicates downgrading patterns of the SRS antenna switching patterns supported by UE, the downgrading patterns indicated by the third information is downgrading patterns corresponding to at least one of one or more SRS antenna switching patterns indicated by the first information and/or the second information, and the SRS configuration information is SRS configuration information that corresponds to one SRS antenna switching pattern of a plurality of SRS antenna switching patterns indicated by the first information and the SRS antenna switching patterns indicated by the second information and the downgrading patterns indicated by the third information.

The above method may also be extended to scenarios with multiple third information. For example, one parameter indicates that UE supports downgrading patterns of SRS antenna switching patterns indicated by the first information, and another parameter indicates that UE supports downgrading patterns of SRS antenna switching patterns indicated by the second information. Specific ways may refer to the above embodiments, and are not described here.

In the method for information transmission provided by embodiments of the present application, by restricting the number of SRS antenna switching pattern combinations capable of being indicated, it may avoid wasting signaling resources and improve the resource utilization rate.

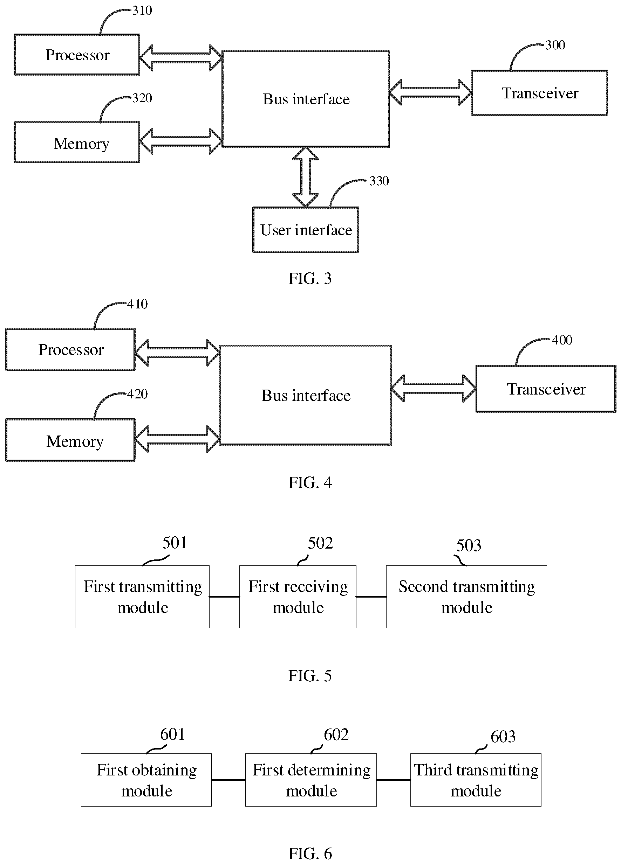

FIG. 3 is a schematic structural diagram of a terminal according to an embodiment of the present application. As shown in FIG. 3, the terminal includes a memory 320, a transceiver 300, and a processor 310.

The memory 320 is used to store a computer program, the transceiver 300 is used to transmit and receive data under the control of the processor 310, and the processor 310 is used to read the computer program in the memory 320 and perform operations of:
transmitting SRS antenna switching capability information to a network device, where the SRS antenna switching capability information includes first information;
receiving SRS configuration information transmitted by the network device, where the SRS configuration information is determined by the network device based on the SRS antenna switching capability information; and
transmitting an SRS based on the SRS configuration information,
where the first information is for indicating one or more of the following information:
   UE not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

The transceiver 300 is used to receive and transmit data under the control of the processor 310.

In FIG. 3, a bus architecture may include any number of interconnected buses and bridges, and various circuits of one or more processors represented by processor 310 and a memory represented by memory 320 are linked together. The bus architecture may also link various other circuits such as peripheral devices, voltage regulators, power management circuits, etc., which are well known in the art. Therefore, it is not further described in this article. The bus interface provides an interface. The transceiver 300 may be multiple elements, that is, a transmitter and a receiver, which provides a unit for communicating with various other devices on a transmission medium (including a wireless channel, a wired channel, an optical cable and other transmission medium). For different user equipment, the user interface 330 may also be an interface capable of connecting required equipment externally and internally. The connected equipment includes, but is not limited to, a keypad, a display, a speaker, a microphone, a joystick, etc.

The processor 310 is responsible for managing the bus architecture and general processing, and the memory 320 may store data used by the processor 310 when performing operations.

In an embodiment, the processor 310 may be a central processing unit (CPU), an application specific integrated circuit (ASIC), a field-programmable gate array (FPGA) or a complex programmable logic device (CPLD), and the processor may also be a multi-core architecture.

The processor is used to execute any of the methods provided in the embodiments of the present application according to obtained executable instructions by calling the computer program stored in the memory. The processor and memory may also be physically separated.

In an embodiment, in case that the first information is for indicating the plurality of SRS antenna switching patterns supported by UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each SRS antenna switching patterns in the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

In an embodiment, the SRS antenna switching capability information further includes second information, and the second information is for indicating one or more of the following information:
UE not supporting SRS antenna switching patterns in a second set;
UE not supporting SRS antenna switching;
one SRS antenna switching pattern supported by UE in the second set; or
a plurality of SRS antenna switching patterns supported by UE in the second set.

In an embodiment, in case that the first information is for indicating one or more SRS antenna switching patterns supported by UE in the first set, and the second information is for indicating one or more SRS antenna switching patterns supported by UE in the second set, all SRS antenna switching patterns indicated by the first information and the SRS antenna switching patterns indicated by the second information meet one or more of the following conditions:
any of SRS antenna switching patterns indicated by the first information and the SRS antenna switching patterns indicated by the second information is not a downgrading pattern of other SRS antenna switching patterns in all SRS antenna switching patterns indicated by the first information and the SRS antenna switching patterns indicated by the second information;
the number of receiving antennas corresponding to each SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each SRS antenna switching patterns indicated by the first information and the SRS antenna switching patterns indicated by the second information is the same,
where all SRS antenna switching patterns indicated by the first information and the SRS antenna switching patterns indicated by the second information include one or more SRS antenna switching patterns in the first set indicated by the first information and one or more SRS antenna switching patterns in the second set indicated by the second information.

In an embodiment, UE supports a downgrading pattern of an SRS antenna switching pattern indicated by the first information.

In an embodiment, the SRS antenna switching capability information further includes third information, and the third information is for indicating one or more of the following information:
UE supporting a downgrading pattern of an SRS antenna switching pattern;
UE not supporting a downgrading pattern of an SRS antenna switching pattern; or
a downgrading pattern of an SRS antenna switching pattern supported by UE.

In an embodiment, the SRS antenna switching patterns in the first set include one or more of the following information:
SRS antenna switching patterns supported by a system;
SRS antenna switching patterns configured by the network device; or
preset SRS antenna switching patterns.

In an embodiment, the SRS antenna switching patterns supported by the system include t1r1, tlr2, tlr4, tlr6, tlr8, t2r2, t2r4, t2r6, t2r8, t4r4 and t4r8.

In an embodiment, the preset SRS antenna switching patterns include at least t1r1, t1r2, tlr4, tlr6, tlr8, t2r2, t2r4, t2r6, t2r8, t4r4 and t4r8; or
the preset SRS antenna switching patterns include at least t1r6, t1r8, t2r6, t2r8, and t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns include at least t1r6, t1r8, t2r6, t2r8, t4r8, t1r6-t2r6 and tlr8-t2r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

In an embodiment, the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

In an embodiment, in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to the first SRS antenna switching pattern is not greater than the number of transmitting antenna ports corresponding to the second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to the first SRS antenna switching pattern is not greater than the number of transmitting antenna ports corresponding to the second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, whether the first SRS antenna switching pattern is the downgrading pattern of the second SRS antenna switching pattern is determined by a preset mapping relationship.

In an embodiment, the preset mapping relationship includes at least one of the following:
downgrading patterns corresponding to the SRS antenna switching pattern t1r6 includes at least t1r1, tlr2 and tlr4;
downgrading patterns corresponding to the SRS antenna switching pattern t1r8 includes at least t1r1, tlr2, tlr4 and tlr6;
downgrading patterns corresponding to the SRS antenna switching pattern t2r6 includes at least t1r1, tlr2, t2r2, t2r4;
downgrading patterns corresponding to the SRS antenna switching pattern t2r8 includes at least t1r1, tlr2, tlr4, t2r2, t2r4, t2r6;
downgrading patterns corresponding to the SRS antenna switching pattern t4r8 includes at least t1r1, tlr2, t2r2, t2r4, and t4r4;
downgrading patterns corresponding to the SRS antenna switching pattern t2r2 includes at least t1r1 and tlr2;
downgrading patterns corresponding to the SRS antenna switching pattern t2r4 includes at least t1r1, tlr2, tlr4 and t2r2;
downgrading patterns corresponding to the SRS antenna switching pattern t2r6 includes at least t1r1, tlr2, tlr4, tlr6, t2r2, t2r4;
downgrading patterns corresponding to the SRS antenna switching pattern t2r8 includes at least t1r1, tlr2, tlr4, tlr6, tlr8, t2r2, t2r4, t2r6;
downgrading patterns corresponding to the SRS antenna switching pattern t4r4 includes at least t1r1, t2r2, tlr4 and t2r4; or
downgrading patterns corresponding to the SRS antenna switching pattern t4r8 includes at least t1r1, tlr2, t2r2, t2r4, t4r4, tlr4, tlr6, tlr8, t2r6, t2r8.

The above terminal provided by embodiments of the present application may realize all steps of the above method embodiments with the execution subject as a terminal, and may achieve the same effect. The same parts and beneficial effects of this embodiment as those of the method embodiments are not described here.

FIG. 4 is a schematic structural diagram of a network device according to an embodiment of the present application. As shown in FIG. 4, the network device includes a memory 420, a transceiver 400, and a processor 410.

The memory 420 is used to store a computer program, the transceiver 400 is used to transmit and receive data under the control of the processor 410, and the processor 410 is used to read the computer program in the memory 420 and perform operations of:
obtaining SRS antenna switching capability information transmitted by UE, where the SRS antenna switching capability information includes first information;
determining SRS configuration information based on the SRS antenna switching capability information; and
transmitting the SRS configuration information to UE,
where the first information is for indicating one or more of the following information:
   UE not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

The transceiver 400 is used to receive and transmit data under the control of the processor 410.

In FIG. 4, a bus architecture may include any number of interconnected buses and bridges, and various circuits of one or more processors represented by processor 410 and a memory represented by memory 420 are linked together. The bus architecture may also link various other circuits such as peripheral devices, voltage regulators, power management circuits, etc., which are well known in the art. Therefore, it is not further described in this article. The bus interface provides an interface. The transceiver 400 may be multiple elements, that is, a transmitter and a receiver, which provides a unit for communicating with various other devices on a transmission medium (including a wireless channel, a wired channel, an optical cable and other transmission medium). The processor 410 is responsible for managing the bus architecture and general processing, and the memory 420 may store data used by the processor 410 in performing operations.

The processor 410 may be a central processing unit (CPU), an application specific integrated circuit (ASIC), a field-programmable gate array (FPGA) or a complex programmable logic device (CPLD), and the processor may also be a multi-core architecture.

In an embodiment, the determining SRS configuration information based on the SRS antenna switching capability information includes:
determining the SRS configuration information based on the first information.

In an embodiment, the determining the SRS configuration information based on the first information includes:
in case that the first information is for indicating SRS antenna switching patterns supported by UE in the first set, determining the SRS configuration information based on one or more SRS antenna switching patterns indicated by the first information.

In an embodiment, the SRS antenna switching capability information further includes second information, and the second information is for indicating one or more of the following information:
UE not supporting SRS antenna switching patterns in a second set;
UE not supporting SRS antenna switching;
one SRS antenna switching pattern supported by UE in the second set; or
a plurality of SRS antenna switching patterns supported by UE in the second set.

In an embodiment, the determining SRS configuration information based on the SRS antenna switching capability information includes:
determining the SRS configuration information based on the first information and the second information.

In an embodiment, the determining the SRS configuration information based on the first information and the second information includes:
in case that the first information is for indicating SRS antenna switching patterns supported by UE in the first set, and the second information is for indicating that UE does not support SRS antenna switching patterns in the second set, determining the SRS configuration information based on one or more SRS antenna switching patterns indicated by the first information.

In an embodiment, the determining the SRS configuration information based on the first information and the second information includes:
in case that the first information is for indicating that UE does not support SRS antenna switching patterns in the first set, and the second information is for indicating SRS antenna switching patterns supported by UE in the second set, determining the SRS configuration information based on one or more SRS antenna switching patterns indicated by the second information.

In an embodiment, the determining the SRS configuration information based on the first information and the second information includes:
in case that the first information is for indicating SRS antenna switching patterns supported by UE in the first set, and the second information is for indicating SRS antenna switching patterns supported by UE in the second set, determining the SRS configuration information based on one or more SRS antenna switching patterns indicated by the first information and one or more SRS antenna switching patterns indicated by the second information.

In an embodiment, the SRS antenna switching capability information further includes third information, and the third information is for indicating one or more of the following information:
UE supporting a downgrading pattern of an SRS antenna switching pattern;
UE not supporting a downgrading pattern of an SRS antenna switching pattern; or
a downgrading pattern of an SRS antenna switching pattern supported by UE.

In an embodiment, the determining SRS configuration information based on the SRS antenna switching capability information includes:
determining the SRS configuration information based on the first information and the third information; or
determining the SRS configuration information based on the first information, the second information and the third information.

In an embodiment, the determining the SRS configuration information based on the first information and the third information includes:
in case that the first information is for indicating SRS antenna switching patterns supported by UE in the first set, and the third information is for indicating a downgrading pattern of an SRS antenna switching pattern supported by UE, determining the SRS configuration information based on one or more SRS antenna switching patterns indicated by the first information and downgrading patterns of one or more SRS antenna switching patterns indicated by the first information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns in the second set supported by UE, and the third information is for indicating that UE does not support a downgrading pattern of an SRS antenna switching pattern, determining the SRS configuration information based on one or more SRS antenna switching patterns indicated by the second information;
in case that the first information is for indicating SRS antenna switching patterns supported by UE in the first set, the second information is for indicating that UE does not support SRS antenna switching patterns in the second set, and the third information is for indicating that UE does not support a downgrading pattern of an SRS antenna switching pattern, determining the SRS configuration information based on one or more SRS antenna switching patterns indicated by the first information;
in case that the first information is for indicating SRS antenna switching patterns supported by UE in the first set, the second information is for indicating SRS antenna switching patterns supported by UE in the second set, and the third information is for indicating that UE does not support a downgrading pattern of an SRS antenna switching pattern, determining the SRS configuration information based on one or more SRS antenna switching patterns indicated by the first information and one or more SRS antenna switching patterns indicated by the second information;
in case that the first information is for indicating that UE does not support SRS antenna switching patterns in the first set, the second information is for indicating SRS antenna switching patterns supported by UE in the second set, and the third information is for indicating that UE supports a downgrading pattern of an SRS antenna switching pattern, determining the SRS configuration information based on one or more SRS antenna switching patterns indicated by the second information and downgrading patterns of one or more SRS antenna switching patterns indicated by the second information;
in case that the first information is for indicating SRS antenna switching patterns supported by UE in the first set, the second information is for indicating that UE does not support SRS antenna switching patterns in the second set, and the third information is for indicating that UE supports a downgrading pattern of an SRS antenna switching pattern, determining the SRS configuration information based on one or more SRS antenna switching patterns indicated by the first information and downgrading patterns of one or more SRS antenna switching patterns indicated by the first information; or
in case that the first information is for indicating SRS antenna switching patterns supported by UE in the first set, the second information is for indicating SRS antenna switching patterns supported by UE in the second set, and the third information is for indicating that UE supports a downgrading pattern of an SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

In an embodiment, the downgrading patterns of the SRS antenna switching patterns indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading pattern of the SRS antenna switching patterns indicated by the third information are all or part of the downgrading patterns corresponding to the SRS antenna switching patterns indicated by the first information and the downgrading patterns corresponding to the SRS antenna switching patterns indicated by the second information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns supported by UE in the second set, and the third information is for indicating a downgrading pattern of an SRS antenna switching pattern supported by UE, determining the SRS configuration information based on one or more SRS antenna switching patterns indicated by the second information and the downgrading pattern of the SRS antenna switching pattern supported by UE indicated by the third information;
in case that the first information is for indicating SRS antenna switching patterns supported by UE in the first set, the second information is for indicating that UE does not support SRS antenna switching patterns in the second set, and the third information is for indicating a downgrading pattern of an SRS antenna switching pattern supported by UE, determining the SRS configuration information based on one or more SRS antenna switching patterns indicated by the first information and the downgrading pattern of the SRS antenna switching pattern supported by UE indicated by the third information;
in case that the first information is for indicating that UE does not support SRS antenna switching patterns in the first set, the second information is for indicating that UE does not support SRS antenna switching patterns in the second set, and the third information is for indicating a downgrading pattern of an SRS antenna switching pattern supported by UE, determining the SRS configuration information based on the downgrading pattern of the SRS antenna switching pattern supported by UE indicated by the third information; or
in case that the first information is for indicating SRS antenna switching patterns supported by UE in the first set, the second information is for indicating SRS antenna switching patterns supported by UE in the second set, and the third information is for indicating a downgrading pattern of an SRS antenna switching pattern supported by UE, determining the SRS configuration information based on one or more SRS antenna switching patterns indicated by the first information, one or more SRS antenna switching patterns indicated by the second information and the downgrading pattern of the SRS antenna switching pattern supported by UE indicated by the third information.

The above terminal provided by the embodiments of the present application may realize all steps of the above method embodiments with the execution subject as the network device, and may achieve the same effect. The same parts and beneficial effects of this embodiment as those of the method embodiments are not described here.

FIG. 5 is a first schematic flowchart of an apparatus for information transmission according to an embodiment of the present application. As shown in FIG. 5, an embodiment of the present application provides an apparatus for information transmission including:
a first transmitting module, used for transmitting sounding reference signal (SRS) antenna switching capability information to a network device, where the SRS antenna switching capability information includes first information;
a first receiving module, used for receiving SRS configuration information transmitted by the network device, where the SRS configuration information is determined by the network device based on the SRS antenna switching capability information; and
a second transmitting module, used for transmitting an SRS based on the SRS configuration information,
where the first information is for indicating one or more of the following information:
   UE not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

In an embodiment, in case that the first information is for indicating the plurality of SRS antenna switching patterns supported by UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each SRS antenna switching patterns in the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

In an embodiment, the SRS antenna switching capability information further includes second information, and the second information is for indicating one or more of the following information:
UE not supporting SRS antenna switching patterns in a second set;
UE not supporting SRS antenna switching;
one SRS antenna switching pattern supported by UE in the second set; or
a plurality of SRS antenna switching patterns supported by UE in the second set.

In an embodiment, in case that the first information is for indicating one or more SRS antenna switching patterns supported by UE in the first set, and the second information is for indicating one or more SRS antenna switching patterns supported by UE in the second set, all SRS antenna switching patterns indicated by the first information and the SRS antenna switching patterns indicated by the second information meet one or more of the following conditions:
any of SRS antenna switching patterns indicated by the first information and the SRS antenna switching patterns indicated by the second information is not a downgrading pattern of other SRS antenna switching patterns in all SRS antenna switching patterns indicated by the first information and the SRS antenna switching patterns indicated by the second information;
the number of receiving antennas corresponding to each SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each SRS antenna switching patterns indicated by the first information and the SRS antenna switching patterns indicated by the second information is the same,
where all SRS antenna switching patterns indicated by the first information and the SRS antenna switching patterns indicated by the second information include one or more SRS antenna switching patterns in the first set indicated by the first information and one or more SRS antenna switching patterns in the second set indicated by the second information.

In an embodiment, UE supports a downgrading pattern of an SRS antenna switching pattern indicated by the first information.

In an embodiment, the SRS antenna switching capability information further includes third information, and the third information is for indicating one or more of the following information:
UE supporting a downgrading pattern of an SRS antenna switching pattern;
UE not supporting a downgrading pattern of an SRS antenna switching pattern; or
a downgrading pattern of an SRS antenna switching pattern supported by UE.

In an embodiment, the SRS antenna switching patterns in the first set include one or more of the following information:
SRS antenna switching patterns supported by a system;
SRS antenna switching patterns configured by the network device; or
preset SRS antenna switching patterns.

In an embodiment, the SRS antenna switching patterns supported by the system include t1r1, tlr2, tlr4, tlr6, tlr8, t2r2, t2r4, t2r6, t2r8, t4r4 and t4r8.

In an embodiment, the preset SRS antenna switching patterns include at least t1r1, t1r2, tlr4, tlr6, tlr8, t2r2, t2r4, t2r6, t2r8, t4r4 and t4r8; or
the preset SRS antenna switching patterns include at least t1r6, t1r8, t2r6, t2r8, and t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns include at least t1r6, t1r8, t2r6, t2r8, t4r8, t1r6-t2r6 and tlr8-t2r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns include at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

In an embodiment, the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

In an embodiment, in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to the first SRS antenna switching pattern is not greater than the number of transmitting antenna ports corresponding to the second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, in case that the number of transmitting antenna ports corresponding to the first SRS antenna switching pattern is not greater than the number of transmitting antenna ports corresponding to the second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, where the first SRS antenna port switching pattern and the second SRS antenna port switching pattern are any two different SRS antenna port switching patterns.

In an embodiment, whether the first SRS antenna switching pattern is the downgrading pattern of the second SRS antenna switching pattern is determined by a preset mapping relationship.

In an embodiment, the preset mapping relationship includes at least one of the following:
downgrading patterns corresponding to the SRS antenna switching pattern t1r6 includes at least t1r1, tlr2 and tlr4;
downgrading patterns corresponding to the SRS antenna switching pattern t1r8 includes at least t1r1, tlr2, tlr4 and tlr6;
downgrading patterns corresponding to the SRS antenna switching pattern t2r6 includes at least t1r1, tlr2, t2r2, t2r4;
downgrading patterns corresponding to the SRS antenna switching pattern t2r8 includes at least t1r1, tlr2, tlr4, t2r2, t2r4, t2r6;
downgrading patterns corresponding to the SRS antenna switching pattern t4r8 includes at least t1r1, tlr2, t2r2, t2r4, and t4r4;
downgrading patterns corresponding to the SRS antenna switching pattern t2r2 includes at least t1r1 and tlr2;
downgrading patterns corresponding to the SRS antenna switching pattern t2r4 includes at least t1r1, tlr2, tlr4 and t2r2;
downgrading patterns corresponding to the SRS antenna switching pattern t2r6 includes at least t1r1, tlr2, tlr4, tlr6, t2r2, t2r4;
downgrading patterns corresponding to the SRS antenna switching pattern t2r8 includes at least t1r1, tlr2, tlr4, tlr6, tlr8, t2r2, t2r4, t2r6;
downgrading patterns corresponding to the SRS antenna switching pattern t4r4 includes at least t1r1, t2r2, tlr4 and t2r4; or
downgrading patterns corresponding to the SRS antenna switching pattern t4r8 includes at least t1r1, tlr2, t2r2, t2r4, t4r4, tlr4, tlr6, tlr8, t2r6, t2r8.

The above apparatus for information transmission provided by embodiments of the present application may realize all method steps of the above method embodiments with the execution subject as a terminal, and may achieve the same effect. The same parts and beneficial effects of this embodiment as those of the method embodiments are not described here.

FIG. 6 is a second schematic flowchart of an apparatus for information transmission according to an embodiment of the present application. As shown in FIG. 6, an embodiment of the present application provides an apparatus for information transmission, including:
a first obtaining module, used for obtaining sounding reference signal (SRS) antenna switching capability information transmitted by UE, where the SRS antenna switching capability information includes first information;
a first determining module, used for determining SRS configuration information based on the SRS antenna switching capability information; and
a third transmitting module, used for transmitting the SRS configuration information to UE,
where the first information is for indicating one or more of the following information:
   UE not supporting SRS antenna switching patterns in a first set;
   UE not supporting SRS antenna switching;
   one SRS antenna switching pattern supported by UE in the first set; or
   a plurality of SRS antenna switching patterns supported by UE in the first set.

In an embodiment, the determining SRS configuration information based on the SRS antenna switching capability information includes:
determining the SRS configuration information based on the first information.

In an embodiment, the determining the SRS configuration information based on the first information includes:
in case that the first information is for indicating SRS antenna switching patterns supported by UE in the first set, determining the SRS configuration information based on one or more SRS antenna switching patterns indicated by the first information.

In an embodiment, the SRS antenna switching capability information further includes second information, and the second information is for indicating one or more of the following information:
UE not supporting SRS antenna switching patterns in a second set;
UE not supporting SRS antenna switching;
one SRS antenna switching pattern supported by UE in the second set; or
a plurality of SRS antenna switching patterns supported by UE in the second set.

In an embodiment, the determining SRS configuration information based on the SRS antenna switching capability information includes:
determining the SRS configuration information based on the first information and the second information.

In an embodiment, the determining the SRS configuration information based on the first information and the second information includes:
in case that the first information is for indicating SRS antenna switching patterns supported by UE in the first set, and the second information is for indicating that UE does not support SRS antenna switching patterns in the second set, determining the SRS configuration information based on one or more SRS antenna switching patterns indicated by the first information.

In an embodiment, the determining the SRS configuration information based on the first information and the second information includes:
in case that the first information is for indicating that UE does not support SRS antenna switching patterns in the first set, and the second information is for indicating SRS antenna switching patterns supported by UE in the second set, determining the SRS configuration information based on one or more SRS antenna switching patterns indicated by the second information.

In an embodiment, the determining the SRS configuration information based on the first information and the second information includes:
in case that the first information is for indicating SRS antenna switching patterns supported by UE in the first set, and the second information is for indicating SRS antenna switching patterns supported by UE in the second set, determining the SRS configuration information based on one or more SRS antenna switching patterns indicated by the first information and one or more SRS antenna switching patterns indicated by the second information.

In an embodiment, the SRS antenna switching capability information further includes third information, and the third information is for indicating one or more of the following information:
UE supporting a downgrading pattern of an SRS antenna switching pattern;
UE not supporting a downgrading pattern of an SRS antenna switching pattern; or
a downgrading pattern of an SRS antenna switching pattern supported by UE.

In an embodiment, the determining SRS configuration information based on the SRS antenna switching capability information includes:
determining the SRS configuration information based on the first information and the third information; or
determining the SRS configuration information based on the first information, the second information and the third information.

In an embodiment, the determining the SRS configuration information based on the first information and the third information includes:
in case that the first information is for indicating SRS antenna switching patterns supported by UE in the first set, and the third information is for indicating a downgrading pattern of an SRS antenna switching pattern supported by UE, determining the SRS configuration information based on one or more SRS antenna switching patterns indicated by the first information and downgrading patterns of one or more SRS antenna switching patterns indicated by the first information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns in the second set supported by UE, and the third information is for indicating that UE does not support a downgrading pattern of an SRS antenna switching pattern, determining the SRS configuration information based on one or more SRS antenna switching patterns indicated by the second information;
in case that the first information is for indicating SRS antenna switching patterns supported by UE in the first set, the second information is for indicating that UE does not support SRS antenna switching patterns in the second set, and the third information is for indicating that UE does not support a downgrading pattern of an SRS antenna switching pattern, determining the SRS configuration information based on one or more SRS antenna switching patterns indicated by the first information;
in case that the first information is for indicating SRS antenna switching patterns supported by UE in the first set, the second information is for indicating SRS antenna switching patterns supported by UE in the second set, and the third information is for indicating that UE does not support a downgrading pattern of an SRS antenna switching pattern, determining the SRS configuration information based on one or more SRS antenna switching patterns indicated by the first information and one or more SRS antenna switching patterns indicated by the second information;
in case that the first information is for indicating that UE does not support SRS antenna switching patterns in the first set, the second information is for indicating SRS antenna switching patterns supported by UE in the second set, and the third information is for indicating that UE supports a downgrading pattern of an SRS antenna switching pattern, determining the SRS configuration information based on one or more SRS antenna switching patterns indicated by the second information and downgrading patterns of one or more SRS antenna switching patterns indicated by the second information;
in case that the first information is for indicating SRS antenna switching patterns supported by UE in the first set, the second information is for indicating that UE does not support SRS antenna switching patterns in the second set, and the third information is for indicating that UE supports a downgrading pattern of an SRS antenna switching pattern, determining the SRS configuration information based on one or more SRS antenna switching patterns indicated by the first information and downgrading patterns of one or more SRS antenna switching patterns indicated by the first information; or
in case that the first information is for indicating SRS antenna switching patterns supported by UE in the first set, the second information is for indicating SRS antenna switching patterns supported by UE in the second set, and the third information is for indicating that UE supports a downgrading pattern of an SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

In an embodiment, the downgrading patterns of the SRS antenna switching patterns indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading patterns of the SRS antenna switching patterns indicated by the third information are all or part of the downgrading patterns corresponding to the SRS antenna switching patterns indicated by the first information and the downgrading patterns corresponding to the SRS antenna switching patterns indicated by the second information.

In an embodiment, the determining the SRS configuration information based on the first information, the second information and the third information includes one or more of the following:
in case that the first information is for indicating that UE does not support SRS antenna switching patterns in the first set, the second information is for indicating SRS antenna switching patterns supported by UE in the second set, and the third information is for indicating a downgrading pattern of an SRS antenna switching pattern supported by UE, determining the SRS configuration information based on one or more SRS antenna switching patterns indicated by the second information and the downgrading pattern of the SRS antenna switching pattern supported by UE indicated by the third information;
in case that the first information is for indicating SRS antenna switching patterns supported by UE in the first set, the second information is for indicating that UE does not support SRS antenna switching patterns in the second set, and the third information is for indicating a downgrading pattern of an SRS antenna switching pattern supported by UE, determining the SRS configuration information based on one or more SRS antenna switching patterns indicated by the first information and the downgrading pattern of the SRS antenna switching pattern supported by UE indicated by the third information;
in case that the first information is for indicating that UE does not support SRS antenna switching patterns in the first set, the second information is for indicating that UE does not support SRS antenna switching patterns in the second set, and the third information is for indicating a downgrading pattern of an SRS antenna switching pattern supported by UE, determining the SRS configuration information based on the downgrading pattern of the SRS antenna switching pattern supported by UE indicated by the third information; or
in case that the first information is for indicating SRS antenna switching patterns supported by UE in the first set, the second information is for indicating SRS antenna switching patterns supported by UE in the second set, and the third information is for indicating a downgrading pattern of an SRS antenna switching pattern supported by UE, determining the SRS configuration information based on one or more SRS antenna switching patterns indicated by the first information, one or more SRS antenna switching patterns indicated by the second information and the downgrading pattern of the SRS antenna switching pattern supported by UE indicated by the third information.

The above apparatus for information transmission provided by embodiments of the present application may realize all steps of the above method embodiments with the execution subject as the network device, and may achieve the same effect. The same parts and beneficial effects of this embodiment as those of the method embodiments are not described here.

It should be noted that the division of units/modules in the above embodiments of the present application is schematic, which is only a logical function division, and there may be another division way in actual implementation. In addition, each functional unit in each embodiment of the present application may be integrated in a processing unit, or each unit may exist physically independently, or two or more units may be integrated in a unit. The integrated units mentioned above may be realized in the form of hardware or software functional units.

If the integrated unit is realized in a form of a software functional unit and sold or used as an independent product, it may be stored in a processor readable storage medium. Based on this understanding, solutions of the present application may be embodied in a form of a software product, which is stored in a storage medium, and includes several instructions to cause a computer device (which may be a personal computer, server, or network device, etc.) or a processor to perform the methods described in various embodiments of the present application or a part thereof. The aforementioned storage medium includes: a USB flash disk, a mobile hard disk, a read-only memory (ROM), a random access memory (RAM), a magnetic disc or an optical disc and other mediums that may store program codes.

An embodiment of the present application further provides a computer readable storage medium having a computer program stored thereon that causes a computer to perform the steps of the methods for information transmission described above.

The computer-readable storage medium provided by embodiments of the present application may realize all steps implemented by the above method embodiments, and may achieve the same effect. The same parts and beneficial effects of this embodiment as those of the method embodiments are not described here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as a CD, a DVD, a BD, a HVD, etc.), and a semiconductor memory (such as a ROM, a EPROM, a EEPROM, a non-volatile memory (NAND FLASH), a solid-state drive (SSD)), etc.

In addition, the terms "first", "second", etc. in the embodiments of the present application are used to distinguish similar objects, not to describe a specific order or sequence. The terms used in this way may be interchanged in appropriate cases, so that the embodiments of the present application may be implemented in order other than those illustrated or described here, and the objects distinguished by "first" and "second" are usually of the same type, and do not limit the number of objects, for example, the first object may be one or multiple.

The singular forms "alan", "one", "the" and "this/these" used herein may further include the plural forms, unless specifically stated. The term "including" used in the specification of the present application refers to existence of features, integers, steps, operations, elements and/or components, but does not exclude existence or addition of one or more other features, integers, steps, operations, elements, components and/or their groups. When an element is described to be "connected" or "coupled" to another element, it may be directly connected or coupled to other elements, or there may be an intermediate element. Moreover, the "connection" or "coupling" used herein may include wireless connection or wireless coupling. The phrase "and/or" as used herein includes all or any unit and all combinations of one or more associated listed items.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have "or" relationship.

The term "multiple" in the embodiments of the present application refers to two or more, and other quantifiers are similar to it.

In the present application, "determining B based on A" means that A should be considered when determining B. It is not limited to "B may be determined only based on A", but further includes: "B may be determined based on A and C", "B may be determined based on A, C and E", "C may be determined based on A, and B may be further determined based on C", etc. In addition, it may further include taking A as a condition for determining B, for example, "in case that A meets a first condition, a first method is used to determine B". For another example, "in case that A meets a second condition, B is determined", etc. For another example, "in case that A meets a third condition, B is determined based on a first parameter", etc. A may also be used as a condition to determine B, for example, "in case that A meets a first condition, a first method is used to determine C, and B is further determined based on C.".

The solutions provide by embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

UE involved in the embodiments of the present application may be a device that provides voice and/or data connectivity to a user, a handheld device with a wireless connection function, or other processing device connected to a wireless modem. Types of UE include mobile phones, vehicle user terminals, tablets, laptops, personal digital assistants, mobile Internet apparatuses, wearable devices, etc.

The network device involved in the embodiments of the present application may be a base station, and the base station may include multiple cells providing services for a terminal. Depending on specific application scenarios, the base station may also be called an access point (AP), or may be a device in the access network that communicates with wireless terminal through one or more sectors on the air interface, or other names. The network device may be used to exchange received air frames with Internet protocol (IP) packets, and act as a router between wireless terminal and the rest of the access network, and the rest of the access network may include an Internet protocol (IP) communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), a B5G base station in beyond 5th generation mobile communication system (B5G), a 6G base station in 6G (6th generation mobile communication technology) network architecture, may also be a home evolved node B (HeNB), a relay node, a femto base station (femto), a pico base station (pico), etc., which are not limited in the embodiments of the present application. In some network structures, a network device may include a centralized unit (CU) node and a distributed unit (DU) node, and the centralized unit and the distributed unit may also be geographically separated.

The network device and the terminal may use one or more antennas respectively for multi input multi output (MIMO) transmission. MIMO transmission may be single user MIMO (SU-MIMO) or multiple user MIMO (MU-MIMO). According to the form and number of root antenna combinations, MIMO transmission may be 2D-MIMO, 3D-MIMO, FD-MIMO or massive MIMO, or diversity transmission or precoding transmission or beam shaping transmission.

Those skilled in the art should understand that embodiments of the present application may be provided as methods, systems, or computer program products. Therefore, the present application may take forms of full hardware embodiments, full software embodiments, or embodiments combining software and hardware. Furthermore, the present application may take forms of a computer program product implemented on one or more computer usable storage medium (including but not limited to a disk memory, an optical memory, etc.) containing computer usable program code.

The present application is described with reference to a flowchart and/or block diagram of a method, device (system), and computer program product provided by embodiments of the present application. Each flow and/or block in the flowchart and/or block diagram may be realized by computer executable instructions, and the combination of flow and/or block in the flowchart and/or block diagram may be realized. These computer executable instructions may be provided to a processor of a general purpose computer, a special purpose computer, an embedded processor or other programmable data processing devices to generate a machine, which makes instructions executed by a processor of a computer or other programmable data processing device generate devices for implementing functions specified in one or more flowcharts and/or one or more block diagrams.

These processor executable instructions may also be stored in a processor readable memory that may guide a computer or other programmable data processing device to work in a specific way, which makes the instructions stored in the processor readable memory generate a manufacture including an instruction apparatus that implements the functions specified in one or more flowcharts and/or one or more block diagrams.

These processor executable instructions may also be loaded onto a computer or other programmable data processing device to enable a series of operating steps to be executed on a computer or other programmable device to generate a computer implemented process, which makes instructions executed on a computer or other programmable device provide steps for implementing functions specified in one or more flows and/or one or more blocks.

Those skilled in the art can make various changes and modifications to the present application without departing from the spirit and scope of the present application. If these modifications and variations of the present application fall within the scope of the claims of the present application and their equivalents, the present application is also intended to include these modifications and variations.

## Claims

1. A method for information transmission, comprising:
transmitting sounding reference signal, SRS, antenna switching capability information to a network device, wherein the SRS antenna switching capability information comprises first information;
receiving SRS configuration information transmitted by the network device, wherein the SRS configuration information is determined by the network device based on the SRS antenna switching capability information; and
transmitting an SRS based on the SRS configuration information,
wherein the first information is for indicating one or more of the following information:
user equipment, UE, not supporting SRS antenna switching patterns in a first set;
UE not supporting SRS antenna switching;
one SRS antenna switching pattern supported by UE in the first set; or
a plurality of SRS antenna switching patterns supported by UE in the first set.

2. The method of claim 1, wherein in case that the first information is for indicating the plurality of SRS antenna switching patterns supported by the UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each of the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

3. The method of claim 2, wherein the SRS antenna switching capability information further comprises second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

4. The method of claim 3, wherein in case that the first information is for indicating one or more SRS antenna switching patterns supported by the UE in the first set, and the second information is for indicating one or more SRS antenna switching patterns supported by the UE in the second set, all SRS antenna switching patterns indicated by the first information and SRS antenna switching patterns indicated by the second information meet one or more of the following conditions:
any of SRS antenna switching patterns indicated by the first information and the SRS antenna switching patterns indicated by the second information is not a downgrading pattern of other SRS antenna switching patterns in the SRS antenna switching patterns indicated by the first information and the SRS antenna switching patterns indicated by the second information;
the number of receiving antennas corresponding to each of the SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each of the SRS antenna switching patterns indicated by the first information and the SRS antenna switching patterns indicated by the second information is the same,
wherein the SRS antenna switching patterns indicated by the first information and the SRS antenna switching patterns indicated by the second information comprise one or more SRS antenna switching patterns in the first set indicated by the first information and one or more SRS antenna switching patterns in the second set indicated by the second information.

5. The method of claim 1, wherein the UE supports a downgrading pattern of the SRS antenna switching pattern indicated by the first information.

6. The method of claim 1, wherein the SRS antenna switching capability information further comprises third information, and the third information is for indicating one or more of the following information:
the UE supporting a downgrading pattern of an SRS antenna switching pattern;
the UE not supporting any downgrading pattern of an SRS antenna switching pattern; or
a downgrading pattern of an SRS antenna switching pattern supported by the UE.

7. The method of claim 1, wherein the SRS antenna switching patterns in the first set comprise one or more of the following information:
SRS antenna switching patterns supported by a system;
SRS antenna switching patterns configured by the network device; or
preset SRS antenna switching patterns.

8. The method of claim 7, wherein the SRS antenna switching patterns supported by the system comprise t1r1, tlr2, tlr4, tlr6, tlr8, t2r2, t2r4, t2r6, t2r8, t4r4 and t4r8.

9. The method of claim 7, wherein the preset SRS antenna switching patterns comprise at least t1r1, tlr2, tlr4, tlr6, tlr8, t2r2, t2r4, t2r6, t2r8, t4r4 and t4r8; or
the preset SRS antenna switching patterns comprise at least t1r6, t1r8, t2r6, t2r8, and t4r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns comprise at least t1r6, t1r8, t2r6, t2r8, t4r8, t1r6-t2r6 and tlr8-t2r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

10. The method of claim 1, wherein the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

11. The method of claim 2, 4, 5 or 6, wherein in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

12. The method of claim 2, 4, 5 or 6, wherein in case that the number of transmitting antenna ports corresponding to a first SRS antenna switching pattern is not greater than the number of transmitting antenna ports corresponding to a second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

13. The method of claim 2, 4, 5 or 6, wherein in case that the number of transmitting antenna ports corresponding to a first SRS antenna switching pattern is not greater than the number of transmitting antenna ports corresponding to a second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

14. The method of claim 2, 4, 5 or 6, wherein whether a first SRS antenna switching pattern is a downgrading pattern of a second SRS antenna switching pattern is determined by a preset mapping relationship.

15. The method of claim 14, wherein the preset mapping relationship comprises at least one of the following:
downgrading patterns corresponding to the SRS antenna port switching pattern t1r6 comprises t1r1, tlr2 and tlr4;
downgrading patterns corresponding to the SRS antenna switching pattern t1r8 comprises t1r1, tlr2, tlr4 and tlr6;
downgrading patterns corresponding to the SRS antenna switching pattern t2r6 comprises t1r1, tlr2, t2r2, t2r4;
downgrading patterns corresponding to the SRS antenna switching pattern t2r8 comprises t1r1, tlr2, tlr4, t2r2, t2r4, t2r6;
downgrading patterns corresponding to the SRS antenna switching pattern t4r8 comprises t1r1, tlr2, t2r2, t2r4, and t4r4;
downgrading patterns corresponding to the SRS antenna switching pattern t2r2 comprises t1r1 and tlr2;
downgrading patterns corresponding to the SRS antenna switching pattern t2r4 comprises t1r1, tlr2, tlr4 and t2r2;
downgrading patterns corresponding to the SRS antenna switching pattern t2r6 comprises t1r1, tlr2, tlr4, tlr6, t2r2, t2r4;
downgrading patterns corresponding to the SRS antenna switching pattern t2r8 comprises t1r1, tlr2, tlr4, tlr6, tlr8, t2r2, t2r4, t2r6;
downgrading patterns corresponding to the SRS antenna switching pattern t4r4 comprises t1r1, t2r2, t1r4 and t2r4; or
downgrading patterns corresponding to the SRS antenna switching pattern t4r8 comprises t1r1, tlr2, t2r2, t2r4, t4r4, tlr4, tlr6, tlr8, t2r6, t2r8.

16. A method for information transmission, comprising:
obtaining sounding reference signal, SRS, antenna switching capability information transmitted by UE, wherein the SRS antenna switching capability information comprises first information;
determining SRS configuration information based on the SRS antenna switching capability information; and
transmitting the SRS configuration information to the UE,
wherein the first information is for indicating one or more of the following information:
user equipment, UE, not supporting SRS antenna switching patterns in a first set;
UE not supporting SRS antenna switching;
one SRS antenna switching pattern supported by UE in the first set; or
a plurality of SRS antenna switching patterns supported by the UE in the first set.

17. The method of claim 16, wherein the determining SRS configuration information based on the SRS antenna switching capability information comprises:
determining the SRS configuration information based on the first information.

18. The method of claim 17, wherein the determining the SRS configuration information based on the first information comprises:
in case that the first information is for indicating SRS antenna switching patterns supported by the UE in the first set, determining the SRS configuration information based on one or more SRS antenna switching patterns indicated by the first information.

19. The method of claim 16, wherein the SRS antenna switching capability information further comprises second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

20. The method of claim 19, wherein the determining SRS configuration information based on the SRS antenna switching capability information comprises:
determining the SRS configuration information based on the first information and the second information.

21. The method of claim 20, wherein the determining the SRS configuration information based on the first information and the second information comprises:
in case that the first information is for indicating SRS antenna switching patterns supported by the UE in the first set, and the second information is for indicating that the UE does not support SRS antenna switching patterns in the second set, determining the SRS configuration information based on one or more SRS antenna switching patterns indicated by the first information.

22. The method of claim 20, wherein the determining the SRS configuration information based on the first information and the second information comprises:
in case that the first information is for indicating that UE does not support SRS antenna switching patterns in the first set, and the second information is for indicating SRS antenna switching patterns supported by the UE in the second set, determining the SRS configuration information based on one or more SRS antenna switching patterns indicated by the second information.

23. The method of claim 20, wherein the determining the SRS configuration information based on the first information and the second information comprises:
in case that the first information is for indicating SRS antenna switching patterns supported by the UE in the first set, and the second information is for indicating SRS antenna switching patterns supported by the UE in the second set, determining the SRS configuration information based on one or more SRS antenna switching patterns indicated by the first information and one or more SRS antenna switching patterns indicated by the second information.

24. The method of claim 16 or 19, wherein the SRS antenna switching capability information further comprises third information, and the third information is for indicating one or more of the following information:
the UE supporting a downgrading pattern of the SRS antenna switching pattern;
the UE not supporting any downgrading pattern of the SRS antenna switching pattern; or
a downgrading pattern of the SRS antenna switching pattern supported by the UE.

25. The method of claim 24, wherein the determining SRS configuration information based on the SRS antenna switching capability information comprises:
determining the SRS configuration information based on the first information and the third information; or
determining the SRS configuration information based on the first information, the second information and the third information.

26. The method of claim 25, wherein the determining the SRS configuration information based on the first information and the third information comprises:
in case that the first information is for indicating SRS antenna switching patterns supported by the UE in the first set, and the third information is for indicating a downgrading pattern of the SRS antenna switching pattern supported by the UE, determining the SRS configuration information based on one or more SRS antenna switching patterns indicated by the first information and downgrading patterns of the one or more SRS antenna switching patterns indicated by the first information.

27. The method of claim 25, wherein the determining the SRS configuration information based on the first information, the second information and the third information comprises one or more of the following:
in case that the first information is for indicating that UE does not support SRS antenna switching patterns in the first set, the second information is for indicating SRS antenna switching patterns in the second set supported by the UE, and the third information is for indicating that UE does not support a downgrading pattern of the SRS antenna switching pattern, determining the SRS configuration information based on one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE does not support a downgrading pattern of the SRS antenna switching pattern, determining the SRS configuration information based on one or more SRS antenna switching patterns indicated by the first information;
in case that the first information is for indicating SRS antenna switching patterns supported by the UE in the first set, the second information is for indicating SRS antenna switching patterns supported by the UE in the second set, and the third information is for indicating that the UE does not support a downgrading pattern of the SRS antenna switching pattern, determining the SRS configuration information based on one or more SRS antenna switching patterns indicated by the first information and one or more SRS antenna switching patterns indicated by the second information;
in case that the first information is for indicating that the UE does not support SRS antenna switching patterns in the first set, the second information is for indicating SRS antenna switching patterns supported by the UE in the second set, and the third information is for indicating that the UE supports a downgrading pattern of the SRS antenna switching pattern, determining the SRS configuration information based on one or more SRS antenna switching patterns indicated by the second information and downgrading patterns of the one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE supports a downgrading pattern of the SRS antenna switching pattern, determining the SRS configuration information based on one or more SRS antenna switching patterns indicated by the first information and downgrading patterns of the one or more SRS antenna switching patterns indicated by the first information; or
in case that the first information is for indicating SRS antenna switching patterns supported by the UE in the first set, the second information is for indicating SRS antenna switching patterns supported by the UE in the second set, and the third information is for indicating that the UE supports a downgrading pattern of the SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

28. The method of claim 24, wherein the downgrading patterns of the SRS antenna switching pattern indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading pattern of the SRS antenna switching patterns indicated by the third information are all or part of the downgrading patterns corresponding to the SRS antenna switching patterns indicated by the first information and the downgrading patterns corresponding to the SRS antenna switching pattern indicated by the second information.

29. The method of claim 25, wherein the determining the SRS configuration information based on the first information, the second information and the third information comprises one or more of the following:
in case that the first information is for indicating that UE does not support SRS antenna switching patterns in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the second information and the downgrading pattern of the SRS antenna switching pattern supported by the UE indicated by the third information;
in case that the first information is for indicating SRS antenna switching patterns supported by the UE in the first set, the second information is for indicating that the UE does not support SRS antenna switching patterns in the second set, and the third information is for indicating a downgrading pattern of an SRS antenna switching pattern supported by the UE, determining the SRS configuration information based on one or more SRS antenna switching patterns indicated by the first information and the downgrading pattern of the SRS antenna switching pattern supported by the UE indicated by the third information;
in case that the first information is for indicating that the UE does not support SRS antenna switching patterns in the first set, the second information is for indicating that the UE does not support SRS antenna switching patterns in the second set, and the third information is for indicating a downgrading pattern of an SRS antenna switching pattern supported by the UE, determining the SRS configuration information based on the downgrading pattern of the SRS antenna switching pattern supported by the UE indicated by the third information;
in case that the first information is for indicating SRS antenna switching patterns supported by the UE in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the first information, one or more SRS antenna switching patterns indicated by the second information and the downgrading pattern of the SRS antenna switching pattern supported by the UE indicated by the third information.

30. User equipment, UE, comprising a memory, a transceiver and a processor,
wherein the memory is used to store a computer program, the transceiver is used to transmit and receive data under control of the processor, and the processor is used to read the computer program in the memory and perform operations of:
transmitting sounding reference signal, SRS, antenna switching capability information to a network device, wherein the SRS antenna switching capability information comprises first information;
receiving SRS configuration information transmitted by the network device, wherein the SRS configuration information is determined by the network device based on the SRS antenna switching capability information; and
transmitting an SRS based on the SRS configuration information,
wherein the first information is for indicating one or more of the following information:
user equipment, UE, not supporting SRS antenna switching patterns in a first set;
UE not supporting SRS antenna switching;
one SRS antenna switching pattern supported by UE in the first set; or
a plurality of SRS antenna switching patterns supported by the UE in the first set.

31. The UE of claim 30, wherein in case that the first information is for indicating the plurality of SRS antenna switching patterns supported by the UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each of the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

32. The UE of claim 31, wherein the SRS antenna switching capability information further comprises second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

33. The UE of claim 32, wherein in case that the first information is for indicating one or more SRS antenna switching patterns supported by the UE in the first set, and the second information is for indicating one or more SRS antenna switching patterns supported by the UE in the second set, all SRS antenna switching patterns indicated by the first information and SRS antenna switching patterns indicated by the second information meet one or more of the following conditions:
any of SRS antenna switching patterns indicated by the first information and the SRS antenna switching patterns indicated by the second information is not a downgrading pattern of other SRS antenna switching patterns in the SRS antenna switching patterns indicated by the first information and the SRS antenna switching patterns indicated by the second information;
the number of receiving antennas corresponding to each of the SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each of the SRS antenna switching patterns indicated by the first information and the SRS antenna switching patterns indicated by the second information is the same,
wherein the SRS antenna switching patterns indicated by the first information and the SRS antenna switching patterns indicated by the second information comprise one or more SRS antenna switching patterns in the first set indicated by the first information and one or more SRS antenna switching patterns in the second set indicated by the second information.

34. The UE of claim 30, wherein the UE supports a downgrading pattern of the SRS antenna switching pattern indicated by the first information.

35. The UE of claim 30, wherein the SRS antenna switching capability information further comprises third information, and the third information is for indicating one or more of the following information:
the UE supporting a downgrading pattern of an SRS antenna switching pattern;
the UE not supporting any downgrading pattern of an SRS antenna switching pattern; and
a downgrading pattern of an SRS antenna switching pattern supported by the UE.

36. The UE of claim 30, wherein the SRS antenna switching patterns in the first set comprise one or more of the following information:
SRS antenna switching patterns supported by a system;
SRS antenna switching patterns configured by the network device; or
preset SRS antenna switching patterns.

37. The UE of claim 36, wherein the SRS antenna switching patterns supported by the system comprise t1r1, tlr2, tlr4, tlr6, tlr8, t2r2, t2r4, t2r6, t2r8, t4r4 and t4r8.

38. The UE of claim 36, wherein the preset SRS antenna switching patterns comprise at least t1r1, tlr2, tlr4, tlr6, tlr8, t2r2, t2r4, t2r6, t2r8, t4r4 and t4r8; or
the preset SRS antenna switching patterns comprise at least t1r6, t1r8, t2r6, t2r8, and t4r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns comprise at least t1r6, t1r8, t2r6, t2r8, t4r8, t1r6-t2r6 and tlr8-t2r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

39. The UE of claim 30, wherein the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

40. The UE of claim 31, 33, 34 or 35, wherein in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

41. The UE of claim 31, 33, 34 or 35, wherein in case that the number of transmitting antenna ports corresponding to a first SRS antenna switching pattern is not greater than the number of transmitting antenna ports corresponding to a second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

42. The UE of claim 31, 33, 34 or 35, wherein in case that the number of transmitting antenna ports corresponding to a first SRS antenna switching pattern is not greater than the number of transmitting antenna ports corresponding to a second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

43. The UE of claim 31, 33, 34 or 35, wherein whether a first SRS antenna switching pattern is a downgrading pattern of a second SRS antenna switching pattern is determined by a preset mapping relationship.

44. The UE of claim 43, wherein the preset mapping relationship comprises at least one of the following:
downgrading patterns corresponding to the SRS antenna switching pattern t1r6 comprises t1r1, tlr2 and tlr4;
downgrading patterns corresponding to the SRS antenna switching pattern t1r8 comprises t1r1, tlr2, tlr4 and tlr6;
downgrading patterns corresponding to the SRS antenna switching pattern t2r6 comprises t1r1, tlr2, t2r2, t2r4;
downgrading patterns corresponding to the SRS antenna switching pattern t2r8 comprises t1r1, tlr2, tlr4, t2r2, t2r4, t2r6;
downgrading patterns corresponding to the SRS antenna switching pattern t4r8 comprises t1r1, tlr2, t2r2, t2r4, and t4r4;
downgrading patterns corresponding to the SRS antenna switching pattern t2r2 comprises t1r1 and tlr2;
downgrading patterns corresponding to the SRS antenna switching pattern t2r4 comprises t1r1, tlr2, tlr4 and t2r2;
downgrading patterns corresponding to the SRS antenna switching pattern t2r6 comprises t1r1, tlr2, tlr4, tlr6, t2r2, t2r4;
downgrading patterns corresponding to the SRS antenna switching pattern t2r8 comprises t1r1, tlr2, tlr4, tlr6, tlr8, t2r2, t2r4, t2r6;
downgrading patterns corresponding to the SRS antenna switching pattern t4r4 comprises t1r1, t2r2, tlr4 and t2r4; or
downgrading patterns corresponding to the SRS antenna switching pattern t4r8 comprises t1r1, tlr2, t2r2, t2r4, t4r4, tlr4, tlr6, tlr8, t2r6, t2r8.

45. A network device, comprising a memory, a transceiver and a processor,
wherein the memory is used to store a computer program, the transceiver is used to transmit and receive data under control of the processor, and the processor is used to read the computer program in the memory and perform operations of:
obtaining sounding reference signal, SRS, antenna switching capability information transmitted by UE, wherein the SRS antenna switching capability information comprises first information;
determining SRS configuration information based on the SRS antenna switching capability information; and
transmitting the SRS configuration information to the UE,
wherein the first information is for indicating one or more of the following information:
user equipment, UE, not supporting SRS antenna switching patterns in a first set;
UE not supporting SRS antenna switching;
one SRS antenna switching pattern supported by UE in the first set; or
a plurality of SRS antenna switching patterns supported by the UE in the first set.

46. The network device of claim 45, wherein the determining SRS configuration information based on the SRS antenna switching capability information comprises:
determining the SRS configuration information based on the first information.

47. The network device of claim 46, wherein the determining the SRS configuration information based on the first information comprises:
in case that the first information is for indicating SRS antenna switching patterns supported by the UE in the first set, determining the SRS configuration information based on one or more SRS antenna switching patterns indicated by the first information.

48. The network device of claim 45, wherein the SRS antenna switching capability information further comprises second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

49. The network device of claim 48, wherein the determining SRS configuration information based on the SRS antenna switching capability information comprises:
determining the SRS configuration information based on the first information and the second information.

50. The network device of claim 49, wherein the determining the SRS configuration information based on the first information and the second information comprises:
in case that the first information is for indicating SRS antenna switching patterns supported by the UE in the first set, and the second information is for indicating that the UE does not support SRS antenna switching patterns in the second set, determining the SRS configuration information based on one or more SRS antenna switching patterns indicated by the first information.

51. The network device of claim 49, wherein the determining the SRS configuration information based on the first information and the second information comprises:
in case that the first information is for indicating that UE does not support SRS antenna switching patterns in the first set, and the second information is for indicating SRS antenna switching patterns supported by the UE in the second set, determining the SRS configuration information based on one or more SRS antenna switching patterns indicated by the second information.

52. The network device of claim 49, wherein the determining the SRS configuration information based on the first information and the second information comprises:
in case that the first information is for indicating SRS antenna switching patterns supported by the UE in the first set, and the second information is for indicating SRS antenna switching patterns supported by the UE in the second set, determining the SRS configuration information based on one or more SRS antenna switching patterns indicated by the first information and one or more SRS antenna switching patterns indicated by the second information.

53. The network device of claim 45 or 48, wherein the SRS antenna switching capability information further comprises third information, and the third information is for indicating one or more of the following information:
the UE supporting a downgrading pattern of the SRS antenna switching pattern;
the UE not supporting any downgrading pattern of the SRS antenna switching pattern; or
a downgrading pattern of the SRS antenna switching pattern supported by the UE.

54. The network device of claim 53, wherein the determining SRS configuration information based on the SRS antenna switching capability information comprises:
determining the SRS configuration information based on the first information and the third information; or
determining the SRS configuration information based on the first information, the second information and the third information.

55. The network device of claim 54, wherein the determining the SRS configuration information based on the first information and the third information comprises:
in case that the first information is for indicating SRS antenna switching patterns supported by the UE in the first set, and the third information is for indicating a downgrading pattern of the SRS antenna switching pattern supported by the UE, determining the SRS configuration information based on one or more SRS antenna switching patterns indicated by the first information and downgrading patterns of the one or more SRS antenna switching patterns indicated by the first information.

56. The network device of claim 54, wherein the determining the SRS configuration information based on the first information, the second information and the third information comprises one or more of the following:
in case that the first information is for indicating that UE does not support SRS antenna switching patterns in the first set, the second information is for indicating SRS antenna switching patterns in the second set supported by the UE, and the third information is for indicating that UE does not support a downgrading pattern of the SRS antenna switching pattern, determining the SRS configuration information based on one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE does not support a downgrading pattern of the SRS antenna switching pattern, determining the SRS configuration information based on one or more SRS antenna switching patterns indicated by the first information;
in case that the first information is for indicating SRS antenna switching patterns supported by the UE in the first set, the second information is for indicating SRS antenna switching patterns supported by the UE in the second set, and the third information is for indicating that the UE does not support a downgrading pattern of the SRS antenna switching pattern, determining the SRS configuration information based on one or more SRS antenna switching patterns indicated by the first information and one or more SRS antenna switching patterns indicated by the second information;
in case that the first information is for indicating that the UE does not support SRS antenna switching patterns in the first set, the second information is for indicating SRS antenna switching patterns supported by the UE in the second set, and the third information is for indicating that the UE supports a downgrading pattern of the SRS antenna switching pattern, determining the SRS configuration information based on one or more SRS antenna switching patterns indicated by the second information and downgrading patterns of the one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE supports a downgrading pattern of the SRS antenna switching pattern, determining the SRS configuration information based on one or more SRS antenna switching patterns indicated by the first information and downgrading patterns of the one or more SRS antenna switching patterns indicated by the first information; or
in case that the first information is for indicating SRS antenna switching patterns supported by the UE in the first set, the second information is for indicating SRS antenna switching patterns supported by the UE in the second set, and the third information is for indicating that the UE supports a downgrading pattern of the SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

57. The network device of claim 53, wherein the downgrading patterns of the SRS antenna switching pattern indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading pattern of the SRS antenna switching patterns indicated by the third information are all or part of the downgrading patterns corresponding to the SRS antenna switching patterns indicated by the first information and the downgrading patterns corresponding to the SRS antenna switching pattern indicated by the second information.

58. The network device of claim 54, wherein the determining the SRS configuration information based on the first information, the second information and the third information comprises one or more of the following:
in case that the first information is for indicating that UE does not support SRS antenna switching patterns in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the second information and the downgrading pattern of the SRS antenna switching pattern supported by the UE indicated by the third information;
in case that the first information is for indicating SRS antenna switching patterns supported by the UE in the first set, the second information is for indicating that the UE does not support SRS antenna switching patterns in the second set, and the third information is for indicating a downgrading pattern of an SRS antenna switching pattern supported by the UE, determining the SRS configuration information based on one or more SRS antenna switching patterns indicated by the first information and the downgrading pattern of the SRS antenna switching pattern supported by the UE indicated by the third information;
in case that the first information is for indicating that the UE does not support SRS antenna switching patterns in the first set, the second information is for indicating that the UE does not support SRS antenna switching patterns in the second set, and the third information is for indicating a downgrading pattern of an SRS antenna switching pattern supported by the UE, determining the SRS configuration information based on the downgrading pattern of the SRS antenna switching pattern supported by the UE indicated by the third information;
in case that the first information is for indicating SRS antenna switching patterns supported by the UE in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the first information, one or more SRS antenna switching patterns indicated by the second information and the downgrading pattern of the SRS antenna switching pattern supported by the UE indicated by the third information.

59. An apparatus for information transmission, comprising:
a first transmitting module, used for transmitting sounding reference signal, SRS, antenna switching capability information to a network device, wherein the SRS antenna switching capability information comprises first information;
a first receiving module, used for receiving SRS configuration information transmitted by the network device, wherein the SRS configuration information is determined by the network device based on the SRS antenna switching capability information; and
a second transmitting module, used for transmitting an SRS based on the SRS configuration information,
wherein the first information is for indicating one or more of the following information:
user equipment, UE, not supporting SRS antenna switching patterns in a first set;
UE not supporting SRS antenna switching;
one SRS antenna switching pattern supported by UE in the first set; or
a plurality of SRS antenna switching patterns supported by the UE in the first set.

60. The apparatus of claim 59, wherein in case that the first information is for indicating the plurality of SRS antenna switching patterns supported by the UE in the first set, the plurality of SRS antenna switching patterns meet one or more of the following conditions:
any of the plurality of SRS antenna switching patterns is not a downgrading pattern of other SRS antenna switching patterns in the plurality of SRS antenna switching patterns;
the number of receiving antennas corresponding to each of the plurality of SRS antenna switching patterns is the same;
any of the other SRS antenna switching patterns among the plurality of SRS antenna switching patterns are the downgrading pattern of one of the plurality of SRS antenna switching patterns; or
the number of transmitting antenna ports corresponding to each SRS antenna switching patterns in the plurality of SRS antenna switching patterns is the same.

61. The apparatus of claim 60, wherein the SRS antenna switching capability information further comprises second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

62. The apparatus of claim 61, wherein in case that the first information is for indicating one or more SRS antenna switching patterns supported by the UE in the first set, and the second information is for indicating one or more SRS antenna switching patterns supported by the UE in the second set, all SRS antenna switching patterns indicated by the first information and SRS antenna switching patterns indicated by the second information meet one or more of the following conditions:
any of SRS antenna switching patterns indicated by the first information and the SRS antenna switching patterns indicated by the second information is not a downgrading pattern of other SRS antenna switching patterns in the SRS antenna switching patterns indicated by the first information and the SRS antenna switching patterns indicated by the second information;
the number of receiving antennas corresponding to each of the SRS antenna switching patterns indicated by the first information and the SRS antenna switching patterns indicated by the second information is the same;
all the other SRS antenna switching patterns among the SRS antenna switching patterns indicated by the first information and the SRS antenna switching patterns indicated by the second information are the downgrading pattern of at least one of the SRS antenna switching patterns indicated by the first information and the SRS antenna switching patterns indicated by the second information; or
the number of transmitting antenna ports corresponding to each of the SRS antenna switching patterns indicated by the first information and the SRS antenna switching patterns indicated by the second information is the same,
wherein the SRS antenna switching patterns indicated by the first information and the SRS antenna switching patterns indicated by the second information comprise one or more SRS antenna switching patterns in the first set indicated by the first information and one or more SRS antenna switching patterns in the second set indicated by the second information.

63. The apparatus of claim 59, wherein the UE supports a downgrading pattern of the SRS antenna switching pattern indicated by the first information.

64. The apparatus of claim 59, wherein the SRS antenna switching capability information further comprises third information, and the third information is for indicating one or more of the following information:
the UE supporting a downgrading pattern of an SRS antenna switching pattern;
the UE not supporting any downgrading pattern of an SRS antenna switching pattern; or
a downgrading pattern of an SRS antenna switching pattern supported by the UE.

65. The apparatus of claim 59, wherein the SRS antenna switching patterns in the first set comprise one or more of the following information:
SRS antenna switching patterns supported by a system;
SRS antenna switching patterns configured by the network device; or
preset SRS antenna switching patterns.

66. The apparatus of claim 65, wherein the SRS antenna switching patterns supported by the system comprise t1r1, tlr2, tlr4, tlr6, tlr8, t2r2, t2r4, t2r6, t2r8, t4r4 and t4r8.

67. The apparatus of claim 65, wherein the preset SRS antenna switching patterns comprise at least t1r1, tlr2, tlr4, tlr6, tlr8, t2r2, t2r4, t2r6, t2r8, t4r4 and t4r8; or
the preset SRS antenna switching patterns comprise at least t1r6, t1r8, t2r6, t2r8, and t4r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6 and tlr8-t2r8; or
the preset SRS antenna switching patterns comprise at least t1r6, t1r8, t2r6, t2r8, t4r8, t1r6-t2r6 and tlr8-t2r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6, tlr8-t2r8-t4r8, tlr8-t2r8, tlr8-t4r8, tlr8-t4r8, t2r8-t4r8; or
the preset SRS antenna switching patterns comprise at least t1r1, tlr2, tlr4, tlr6, tlr8, t2r2, t2r4, t2r6, t2r8, t4r4, t4r8, tlr4-t2r4, tlr6-t2r6 and tlr8-t2r8-t4r8.

68. The apparatus of claim 59, wherein the first set is associated with an information domain including SRS antenna port switching capability information; or
the first set is associated with signaling carrying the SRS antenna port switching capability information; or
the first set is associated with an information domain including the first information; or
the first set is associated with signaling carrying the first information.

69. The apparatus of claim 60, 62, 63 or 64, wherein in case that the number of transmitting antenna ports corresponding to a first SRS antenna switching pattern is not greater than the number of transmitting antenna ports corresponding to a second SRS antenna switching pattern, and the number of receiving antennas corresponding to the first SRS antenna switching pattern is not greater than the number of receiving antennas corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

70. The apparatus of claim 60, 62, 63 or 64, wherein in case that the number of transmitting antenna ports corresponding to a first SRS antenna switching pattern is not greater than the number of transmitting antenna ports corresponding to a second SRS antenna switching pattern, and the number of SRS resources indicated by SRS configuration information corresponding to the first SRS antenna switching pattern is not greater than the number of SRS resources indicated by SRS configuration information corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

71. The apparatus of claim 60, 62, 63 or 64, wherein in case that the number of transmitting antenna ports corresponding to a first SRS antenna switching pattern is not greater than the number of transmitting antenna ports corresponding to a second SRS antenna switching pattern, and a ratio of the number of receiving antennas to the number of transmitting antenna ports corresponding to the first SRS antenna switching pattern is not greater than a ratio of the number of receiving antennas to the number of transmitting antenna ports corresponding to the second SRS antenna switching pattern, the first SRS antenna switching pattern is a downgrading pattern of the second SRS antenna switching pattern, wherein the first SRS antenna port switching pattern and the second SRS antenna port switching pattern are any two different SRS antenna port switching patterns.

72. The apparatus of claim 60, 62, 63 or 64, wherein whether a first SRS antenna switching pattern is a downgrading pattern of a second SRS antenna switching pattern is determined by a preset mapping relationship.

73. The apparatus of claim 72, wherein the preset mapping relationship comprises at least one of the following:
downgrading patterns corresponding to the SRS antenna port switching pattern t1r6 comprises t1r1, tlr2 and tlr4;
downgrading patterns corresponding to the SRS antenna switching pattern t1r8 comprises t1r1, tlr2, tlr4 and tlr6;
downgrading patterns corresponding to the SRS antenna switching pattern t2r6 comprises t1r1, tlr2, t2r2, t2r4;
downgrading patterns corresponding to the SRS antenna switching pattern t2r8 comprises t1r1, tlr2, tlr4, t2r2, t2r4, t2r6;
downgrading patterns corresponding to the SRS antenna switching pattern t4r8 comprises t1r1, tlr2, t2r2, t2r4, and t4r4;
downgrading patterns corresponding to the SRS antenna switching pattern t2r2 comprises t1r1 and tlr2;
downgrading patterns corresponding to the SRS antenna switching pattern t2r4 comprises t1r1, tlr2, tlr4 and t2r2;
downgrading patterns corresponding to the SRS antenna switching pattern t2r6 comprises t1r1, tlr2, tlr4, tlr6, t2r2, t2r4;
downgrading patterns corresponding to the SRS antenna switching pattern t2r8 comprises t1r1, tlr2, tlr4, tlr6, tlr8, t2r2, t2r4, t2r6;
downgrading patterns corresponding to the SRS antenna switching pattern t4r4 comprises t1r1, t2r2, tlr4 and t2r4; or
downgrading patterns corresponding to the SRS antenna switching pattern t4r8 comprises t1r1, tlr2, t2r2, t2r4, t4r4, tlr4, tlr6, tlr8, t2r6, t2r8.

74. An apparatus for information transmission, comprising:
a first obtaining module, used for obtaining sounding reference signal, SRS, antenna switching capability information transmitted by UE, wherein the SRS antenna switching capability information comprises first information;
a first determining module, used for determining SRS configuration information based on the SRS antenna switching capability information; and
a third transmitting module, used for transmitting the SRS configuration information to the UE,
wherein the first information is for indicating one or more of the following information:
user equipment, UE, not supporting SRS antenna switching patterns in a first set;
UE not supporting SRS antenna switching;
one SRS antenna switching pattern supported by UE in the first set; or
a plurality of SRS antenna switching patterns supported by the UE in the first set.

75. The apparatus of claim 74, wherein the determining SRS configuration information based on the SRS antenna switching capability information comprises:
determining the SRS configuration information based on the first information.

76. The apparatus of claim 75, wherein the determining the SRS configuration information based on the first information comprises:
in case that the first information is for indicating SRS antenna switching patterns supported by the UE in the first set, determining the SRS configuration information based on one or more SRS antenna switching patterns indicated by the first information.

77. The apparatus of claim 74, wherein the SRS antenna switching capability information further comprises second information, and the second information is for indicating one or more of the following information:
the UE not supporting SRS antenna switching patterns in a second set;
the UE not supporting SRS antenna switching;
one SRS antenna switching pattern supported by the UE in the second set; or
a plurality of SRS antenna switching patterns supported by the UE in the second set.

78. The apparatus of claim 77, wherein the determining SRS configuration information based on the SRS antenna switching capability information comprises:
determining the SRS configuration information based on the first information and the second information.

79. The apparatus of claim 78, wherein the determining the SRS configuration information based on the first information and the second information comprises:
in case that the first information is for indicating SRS antenna switching patterns supported by the UE in the first set, and the second information is for indicating that the UE does not support SRS antenna switching patterns in the second set, determining the SRS configuration information based on one or more SRS antenna switching patterns indicated by the first information.

80. The apparatus of claim 78, wherein the determining the SRS configuration information based on the first information and the second information comprises:
in case that the first information is for indicating that UE does not support SRS antenna switching patterns in the first set, and the second information is for indicating SRS antenna switching patterns supported by the UE in the second set, determining the SRS configuration information based on one or more SRS antenna switching patterns indicated by the second information.

81. The apparatus of claim 78, wherein the determining the SRS configuration information based on the first information and the second information comprises:
in case that the first information is for indicating SRS antenna switching patterns supported by the UE in the first set, and the second information is for indicating SRS antenna switching patterns supported by the UE in the second set, determining the SRS configuration information based on one or more SRS antenna switching patterns indicated by the first information and one or more SRS antenna switching patterns indicated by the second information.

82. The apparatus of claim 74 or 77, wherein the SRS antenna switching capability information further comprises third information, and the third information is for indicating one or more of the following information:
the UE supporting a downgrading pattern of the SRS antenna switching pattern;
the UE not supporting any downgrading pattern of the SRS antenna switching pattern; or
a downgrading pattern of the SRS antenna switching pattern supported by the UE.

83. The apparatus of claim 82, wherein the determining SRS configuration information based on the SRS antenna switching capability information comprises:
determining the SRS configuration information based on the first information and the third information; or
determining the SRS configuration information based on the first information, the second information and the third information.

84. The apparatus of claim 83, wherein the determining the SRS configuration information based on the first information and the third information comprises:
in case that the first information is for indicating SRS antenna switching patterns supported by the UE in the first set, and the third information is for indicating a downgrading pattern of the SRS antenna switching pattern supported by the UE, determining the SRS configuration information based on one or more SRS antenna switching patterns indicated by the first information and downgrading patterns of the one or more SRS antenna switching patterns indicated by the first information.

85. The apparatus of claim 83, wherein the determining the SRS configuration information based on the first information, the second information and the third information comprises one or more of the following:
in case that the first information is for indicating that UE does not support SRS antenna switching patterns in the first set, the second information is for indicating SRS antenna switching patterns in the second set supported by the UE, and the third information is for indicating that UE does not support a downgrading pattern of the SRS antenna switching pattern, determining the SRS configuration information based on one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE does not support a downgrading pattern of the SRS antenna switching pattern, determining the SRS configuration information based on one or more SRS antenna switching patterns indicated by the first information;
in case that the first information is for indicating SRS antenna switching patterns supported by the UE in the first set, the second information is for indicating SRS antenna switching patterns supported by the UE in the second set, and the third information is for indicating that the UE does not support a downgrading pattern of the SRS antenna switching pattern, determining the SRS configuration information based on one or more SRS antenna switching patterns indicated by the first information and one or more SRS antenna switching patterns indicated by the second information;
in case that the first information is for indicating that the UE does not support SRS antenna switching patterns in the first set, the second information is for indicating SRS antenna switching patterns supported by the UE in the second set, and the third information is for indicating that the UE supports a downgrading pattern of the SRS antenna switching pattern, determining the SRS configuration information based on one or more SRS antenna switching patterns indicated by the second information and downgrading patterns of the one or more SRS antenna switching patterns indicated by the second information;
in case that the first information is for indicating SRS antenna switching patterns supported by the UE in the first set, the second information is for indicating that the UE does not support SRS antenna switching patterns in the second set, and the third information is for indicating that the UE supports a downgrading pattern of the SRS antenna switching pattern, determining the SRS configuration information based on one or more SRS antenna switching patterns indicated by the first information and downgrading patterns of the one or more SRS antenna switching patterns indicated by the first information; or
in case that the first information is for indicating SRS antenna switching patterns supported by the UE in the first set, the second information is for indicating SRS antenna switching patterns supported by the UE in the second set, and the third information is for indicating that the UE supports a downgrading pattern of the SRS antenna switching pattern, determining the SRS configuration information based one or more SRS antenna switching patterns indicated by the first information, one or more SRS antenna switching patterns indicated by the first information, and downgrading patterns of one or more SRS antenna switching patterns indicated by the second information.

86. The apparatus of claim 82, wherein the downgrading patterns of the SRS antenna switching pattern indicated by the third information are all or part of the downgrading patterns corresponding to the SRS antenna switching patterns indicated by the first information; or
the downgrading patterns of the SRS antenna switching patterns indicated by the third information are all or part of the downgrading patterns corresponding to the SRS antenna switching patterns indicated by the second information; or
the downgrading pattern of the SRS antenna switching patterns indicated by the third information are all or part of the downgrading patterns corresponding to the SRS antenna switching patterns indicated by the first information and the downgrading patterns corresponding to the SRS antenna switching pattern indicated by the second information.

87. The apparatus of claim 83, wherein the determining the SRS configuration information based on the first information, the second information and the third information comprises one or more of the following:
in case that the first information is for indicating that UE does not support SRS antenna switching patterns in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the second information and the downgrading pattern of the SRS antenna switching pattern supported by the UE indicated by the third information;
in case that the first information is for indicating SRS antenna switching patterns supported by the UE in the first set, the second information is for indicating that the UE does not support SRS antenna switching patterns in the second set, and the third information is for indicating a downgrading pattern of an SRS antenna switching pattern supported by the UE, determining the SRS configuration information based on one or more SRS antenna switching patterns indicated by the first information and the downgrading pattern of the SRS antenna switching pattern supported by the UE indicated by the third information;
in case that the first information is for indicating that the UE does not support SRS antenna switching patterns in the first set, the second information is for indicating that the UE does not support SRS antenna switching patterns in the second set, and the third information is for indicating a downgrading pattern of an SRS antenna switching pattern supported by the UE, determining the SRS configuration information based on the downgrading pattern of the SRS antenna switching pattern supported by the UE indicated by the third information;
in case that the first information is for indicating SRS antenna switching patterns supported by the UE in the first set, the second information is for indicating SRS antenna switching patterns supported by the UE in the second set, and the third information is for indicating a downgrading pattern of an SRS antenna switching pattern supported by the UE, determining the SRS configuration information based on one or more SRS antenna switching patterns indicated by the first information, one or more SRS antenna switching patterns indicated by the second information and the downgrading pattern of the SRS antenna switching pattern supported by the UE indicated by the third information.

88. A computer readable storage medium storing a computer program, wherein the computer program causes a processor to perform the method for information transmission of any one of claims 1 to 29.
